(19) Europäisches Patentamt
European Patent Office
Office européen des brevets

(11) EP 3 604 370 A1

(12) EUROPEAN PATENT APPLICATION

(43) Date of publication:
**05.02.2020 Bulletin 2020/06**

(21) Application number: **18187254.0**

(22) Date of filing: **03.08.2018**

(51) Int Cl.:
***C08G 18/00*** *(2006.01)* ***C08G 18/73*** *(2006.01)*
***C08G 18/76*** *(2006.01)* ***C08G 18/75*** *(2006.01)*
***C08G 18/78*** *(2006.01)* ***C08G 18/10*** *(2006.01)*
***C08G 18/20*** *(2006.01)* ***C08G 18/22*** *(2006.01)*
***B01J 31/00*** *(2006.01)* ***C08G 59/40*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

# (54) CATALYSTS FOR THE SYNTHESIS OF OXAZOLIDINONES

(57) A catalyst for the synthesis of oxazolidinones, preferable polyoxazolidinones, comprising an N-heterocyclic carbene and a Lewis acid (L). The invention is also related to a process for the production of an oxazolidinone compound, preferably a polyoxazolidinone compound, by reacting an isocyanate compound, preferably a polyisocyanate compound with an epoxide compound, preferably a polyepoxide compound, in the presence of the N-heterocyclic carbene and a Lewis acid catalyst and also to the resulting polyoxazolidinone.

EP 3 604 370 A1

## Description

The invention is related to catalysts for the synthesis of oxazolidinones, preferable polyoxazolidinones, comprising an N-heterocyclic carbene and a Lewis acid (L). The invention is also related to a process for the production of an oxazolidinone compound, preferably a polyoxazolidinone compound, by reacting an isocyanate compound, preferably a polyisocyanate compound with an epoxide compound, preferably a polyepoxide compound, in the presence of the N-heterocyclic carbene and a Lewis acid catalyst and also to the resulting polyoxazolidinone.

Oxazolidinones are widely used structural motifs in pharmaceutical applications and the cycloaddition of epoxides and isocyanates seems to be a convenient one-pot synthetic route to it. Expensive catalysts, reactive polar solvents, long reaction times and low chemoselectivities are common in early reports for the synthesis of oxazolidinones (M. E. Dyen and D. Swern, Chem. Rev., 67, 197, 1967). Due to these disadvantages there was the need for alternative methods for the production of oxazolidinones, especially for application of oxazolidinones as structural motif in polymer applications.

WO 2016/128380 A1 discloses thermoplastic polyoxazolidinones with thermal stability, a method for the production of thermoplastic polyoxazolidinones, comprising the step of reacting a biscarbamate or diisocyanate compound with a bisepoxide compound in the presence of a mono-carbamate, a monoisocyanate and/or a mono-epoxide compound as chain regulator and a suitable base having a pKb value of ≤ 9 as catalyst. Polyoxazolidinones are obtained by the polycondensation route, wherein biscarbamates and bisepoxides reacted in the presence of amine catalysts in batch mode or semi-batch mode. The chain group regulators were added in a second step.

In addition, one example discloses the polyoxazolidinone formation by polyaddition route, wherein the diisocyanate compound is added in a semi-batch process to the mixture of a bisepoxide compound and the catalyst. After 16 h a monofunctional isocyanate compound was added to the polyoxazolidinone mixture. The overall reaction time was 22 hours.

The non-published patent application EP 17154416.6 discloses a method for the production of thermoplastic polyoxazolidinones with slightly increased dynamic viscosity and also increased thermal stability by controlling the regioselectivity of the 5-oxazolidinone and 4-oxazolidinone regioisomers. The polyoxazolidinones are obtained by the polycondensation route which comprises at least one biscarbamate compound with at least one bisepoxide compound in the presence of at least one base, at least one Lewis acid catalyst, and optionally at least one chain group regulator, wherein the chain group regulator comprising a mono-carbamate group, a monoisocyanate group and/or a mono-epoxide group, and wherein the base having a pKb-value of ≤ 9. In a first step the biscarbamate compound is reacted with the bisepoxide compound in the presence of a base and a Lewis acid catalyst in batch process followed by the addition of a monofunctional chain group regulator in a second step.

The scientific publication J. Polym. Sci. 8 (1970) 2759-2773 discloses polyoxazolidinones prepared from various bisepoxides and various diisocyanates in the presence of alkaline metal halogenide catalysts. A solution of equimolar bisepoxide and diisocyanate amounts is added dropwise to a reactor containing a LiCl catalyst dissolved in DMF under reflux conditions within 1 h and a subsequent post reaction of 12 to 23 h was carried out under reflux conditions in order to complete the reaction. The addition of monofunctional chain-group regulators is not disclosed.

WO 2014/076024 A1 discloses a method for the production of oxazolidinone compounds, comprising the step of reacting an isocyanate compound with an epoxide compound in the presence of a Lewis acid catalyst and to an oxazolidinone compound obtainable by the latter method.

The non-published patent application EP 17191374.2 discloses a process for producing thermoplastic polyoxazolidinone comprising copolymerization of a diisocyanate compound (A) with a bisepoxide compound (B) in the presence of a catalyst (C) and a compound (D) in a solvent (E), wherein the catalyst (C) is selected from the group consisting of alkali halogenides and earth alkali halogenides, and transition metal halogenides, compound (D) is selected from the group consisting of monofunctional isocyanate, monofunctional epoxide, and wherein the process comprises step ($\alpha$) of placing the solvent (E) and the catalyst (C) in a reactor to provide a mixture, and adding the diisocyanate compound (A), the bisepoxide compound (B) and the compound (D) in step ($\beta$) to the mixture resulting from the step ($\alpha$). The invention is also related to the resulting thermoplastic polyoxazolidinone.

The prior art mainly discloses only the reaction of specifically aromatic polyisocyanates with aromatic polyepoxide compounds to form corresponding polyoxazolidinones. However, polymeric oxazolidinone systems, i.e. with a number average molecular weight of equal or higher 5000 with a, wherein a less-reactive aliphatic polyepoxides and/or aliphatic polyisocyanates are applied are not reported.

Objective of the present invention was therefore to identify an optimized and simple catalyst system for the synthesis of oxazolidinones, wherein the catalyst system should be characterized by a high reactivity that also enables to catalyse the conversion of less reactive epoxides and isocyanates, like aliphatic isocyanates. Furthermore, the system should also have a good chemoselectivity towards the desired oxazolidinones compared to unfavourable side products, e.g. isocyanurates. The latter side-products should be reduced since side-reactions leads to a lower yield of the oxazolidinones and also causing higher downstreaming efforts.

Surprisingly, it has been found that the problem can be solved by catalysts for the synthesis of oxazolidinones, preferable polyoxazolidinones, comprising an N-heterocyclic carbene and a Lewis acid (L).

*Catalyst:*

*N-Heterocvclic carbenes (NHC):*

Carbon atoms, in any compound, that are neutral, divalent and have an electron sextet are defined as carbenes [Angew. Chem. Int. Ed. Engl., 1997, 36, 2162-2187; Chem. Rev., 2000, 100, 39-91]. Their hybridization might be $sp^2$ or sp, depending on the particular electron configuration [Angew. Chem. Int. Ed., 2008, 47, 3122-3172].
N-heterocyclic carbenes (NHC or NHCs) are a class of substances with carbenes in a cyclic structure which contains at least one nitrogen atom [Nature, 2014, 510, 485-496]. The carbenoid carbon atom in this case is predominantly $sp^2$-hybridized and in a singlet electron configuration in which the non-binding $sp^2$-orbital is occupied with two electrons and the p-orbital is unoccupied [Chem. Soc. Rev., 2013, 42, 6723-6753]. The nitrogen atom might be covalently bound to an aliphatic or aromatic hydrocarbon. Ring sizes from three up to seven atoms are known [Angew. Chem. Int. Ed., 2008, 47, 3122-3172; Polym Chem., 2013, 4, 2731-2740]. Most common are five-membered rings containing two or three nitrogen atoms. Examples are imidazolidine, imidazoline and triazol based compounds. In these structures a nitrogen atom might substituted by oxygen, sulfur, (tetra substituted) carbon, phosphor or others.
In an embodiment of the invention the NHCs are a class of substances in which the carbenoidic center is blocked or coordinated, respectively (protected (latent) NHCs). The free carbene in those cases can be released by external stimuli like heat, irradiation, ultrasound or others, e.g. chemically. Known protected NHCs are NHC-$CO_2$-adducts, azolium hydrogen carbonates, NHC-alcohol adducts, NHC-metal complexes. Further, halogenated organic compounds can serve as protecting groups [Catal. Sci. Technol., 2014, 4, 2466-2479].
In a preferred embodiment of the invention the catalyst comprises

i) a mixture of the N-heterocyclic carbene having the general formula (I), (II), (III), (IV) and/or (V) and the Lewis acid (L), with

i-1) formula (I)

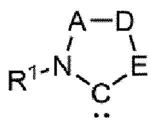

(I)

wherein $R^1$ represents $C_1$-$C_{10}$ alkyl, $C_2$-$C_{10}$ alkenyl, $C_3$-$C_{12}$ cycloalkyl, $C_6$-$C_{100}$ polyoxyalkylene, $C_5$-$C_{10}$ aryl or $C_5$-$C_{10}$ heteroaryl;

wherein A and D mutually independently represents methylene moiety, $CHR^2$, and $CR^2R^2$ or A and D together stand for a moiety from the series ethylene, propylene, butylene, 1,2-phenylene, $R^2$-C=N-, -N=N- or $C_1$-$C_{10}$ alkyl, $C_2$-$C_{10}$ alkenyl, $C_3$-$C_{12}$ cycloalkyl, $C_6$-$C_{100}$ polyoxyalkylene, $C_5$-$C_{10}$ aryl or $C_5$-$C_{10}$ hetaryl group-substituted 1,2-phenylene, -CH=N-, $-CH_2-NR^2-$, vinylene, $-CH_2=CHR^2-$, $-CHR^2=CH_2-$, $-CHR^2=CHR^2-$, the moiety $R^2$ mutually independently having the meaning given above for $R^1$;

and wherein E represents oxygen, sulfur, $-NR^{3'}-$ or $-PR^{3'}$, $R^{3'}$ having the meaning given above for $R^1$;

i-2) formula (II)

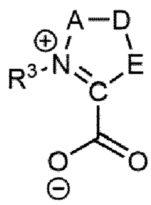

(II)

wherein $R^3$ has the meaning given above in formula (I) for $R^1$;

wherein A and D have the meaning given above in formula (I) for A and D;

wherein E has the meaning given above in formula (I) for E;

and wherein O stands mutually independently for oxygen, sulfur or N-$R^{10}$, wherein $R^{10}$ has the meaning given above in formula (I) for $R^1$;

i-3) formula (III)

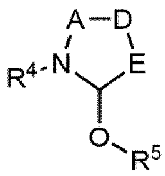

(III)

wherein $R^4$ has the meaning given above in formula (I) for $R^1$;

wherein A and D have the meaning given above in formula (I) for A and D;

wherein E has the meaning given above in formula (I) for E;

and wherein $R^5$ represents $C_1$-$C_{10}$ alkyl, $C_5$-$C_{12}$ cycloalkyl, $C_6$-$C_{100}$ polyoxyalkylene, $C_5$-$C_{10}$ aryl;

i-4) formula (IV)

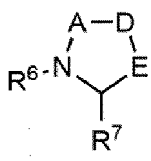

(IV)

wherein $R^6$ has the meaning given above in formula (I) for $R^1$;

wherein A and D have the meaning given above in formula (I) for A and D;

wherein E has the meaning given above in formula (I) for E;

and wherein $R^7$ represents $C_1$-$C_{10}$ perfluoroalkyl, $C_1$-$C_{10}$ perchloroalkyl, partially fluorinated $C_1$-$C_{10}$ alkyl,

partially chlorinated $C_1$-$C_{10}$ alkyl, perfluorinated $C_5$-$C_{10}$ aryl, partially fluorinated $C_5$-$C_{10}$ aryl, perchlorinated $C_5$-$C_{10}$ aryl, partially chlorinated $C_5$-$C_{10}$ aryl, preferably $CF_3$, $CCl_3$, pentafluorophenyl, tetrafluorophenyl moiety;

i-5) formula (V)

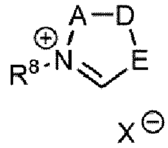

(V)

wherein $R^8$ has the meaning given above in formula (I) for $R^1$;
wherein A and D have the meaning given above in formula (I) for A and D;
wherein E has the meaning given above in formula (I) for E;
and wherein X represents $F^-$, $Cl^-$, $Br^-$, I, $BF_4^-$, $PF_6^-$, $SbF_6^-$, $HCO_3^-$;

and/or
ii) compounds having the formula (VI)

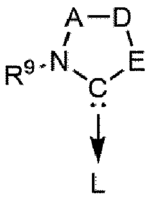

(VI)

wherein $R^9$ has the meaning given above in formula (I) for $R^1$;
wherein A and D have the meaning given above in formula (I) for A and D;
wherein E has the meaning given above in formula (I) for E;
and wherein L is the Lewis acid.

In a further preferred embodiment of the invention $R^1$, $R^2$, $R^3$, $R^4$, $R^5$, $R^6$, $R^8$, $R^9$ and $R^{10}$ in formulae (I), (II), (III), (IV), (V) and (VI) moieties are mutually independently and represents methyl, ethyl, n-propyl, isopropyl, tert-butyl, neopentyl, isoamyl, cyclohexyl, phenyl, 2,6-dimethylphenyl, 2,6-diisopropylphenyl or mesityl moiety; wherein $R^7$ represents the CF3, CCl3, pentafluorophenyl, tetrafluorophenyl moiety; and wherein moieties A and D represents mutually independently together stand for an ethylene, vinylene or propylene moiety.

In a more preferred embodiment of the invention $R^1$, $R^2$, $R^3$, $R^4$, $R^5$, $R^6$, $R^8$, $R^9$ and $R^{10}$ are mutually independently and represents methyl, isopropyl, phenyl or mesityl moiety.

In a most preferred embodiment of the invention the N-heterocyclic carbene is one or more compounds having the formulae (II-1), (II-2), (II-3), (II-4), (II-5) and (II-6)

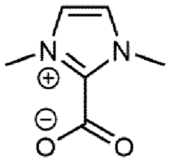 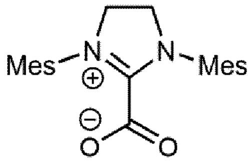 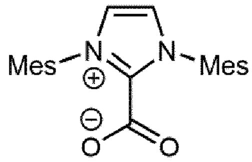 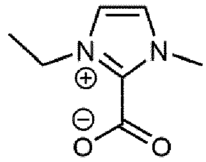

**II-1** **II-2** **II-3** **II-4**

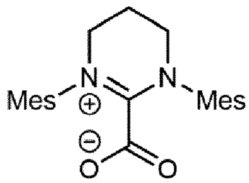 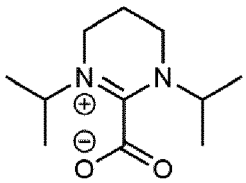

**II-5** **II-6**

(VII)

In an alternative embodiment of the invention the NHC is an NHC $CO_2$-adduct (Mes=2,4,6-trimethylphenyl) [Chem. Commun., 2003, 28-29; Chem. Eur. J., 2009, 15, 3103-3109; Eur. J. Inorg. Chem., 2009, 1970-1976], wherein the structure can be found in Figure (VII).

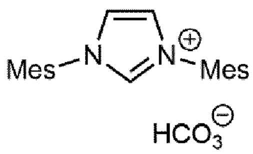

(VIII)

In a further alternative embodiment of the invention the NHCs are azolium hydrogen carbonates [J. Am. Chem. Soc., 2012, 134, 6776-6784] that are shown in Figure (VIII).

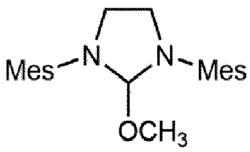 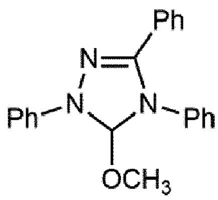

(IX)

In a further alternative embodiment of the invention the NHCs are alcohol adducts [J. Am. Chem. Soc., 2005, 127, 25, 9079-9084; Angew. Chem. Int. Ed. Engl., 1995, 34, 9, 1021-1023] that are shown in figure (IX).

In a further alternative embodiment of the invention the NHCs are protected by halogenated organic compounds [Helvetica Chimica Acta, 1999, 82, 12, 2348-2364; Chem. Eur. J., 2004, 10, 4073-4079] are shown in Figure (X).

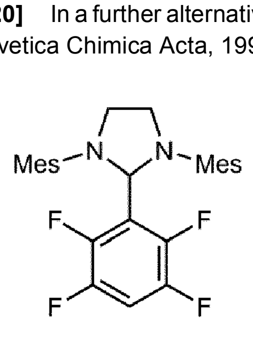 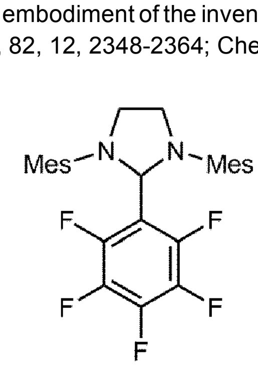 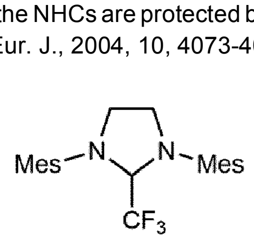 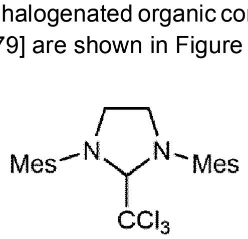

(X)

In a further alternative embodiment of the invention the catalyst comprises NHC metal complexes that are summarized in Figure (XI), wherein, the arrow in the figure below typifies the coordination of the carbonic electron pair of the carbene towards the Lewis acidic center to form a complex. (thf) stands for a tetrahydrofuran which is coordinated

to the complex).

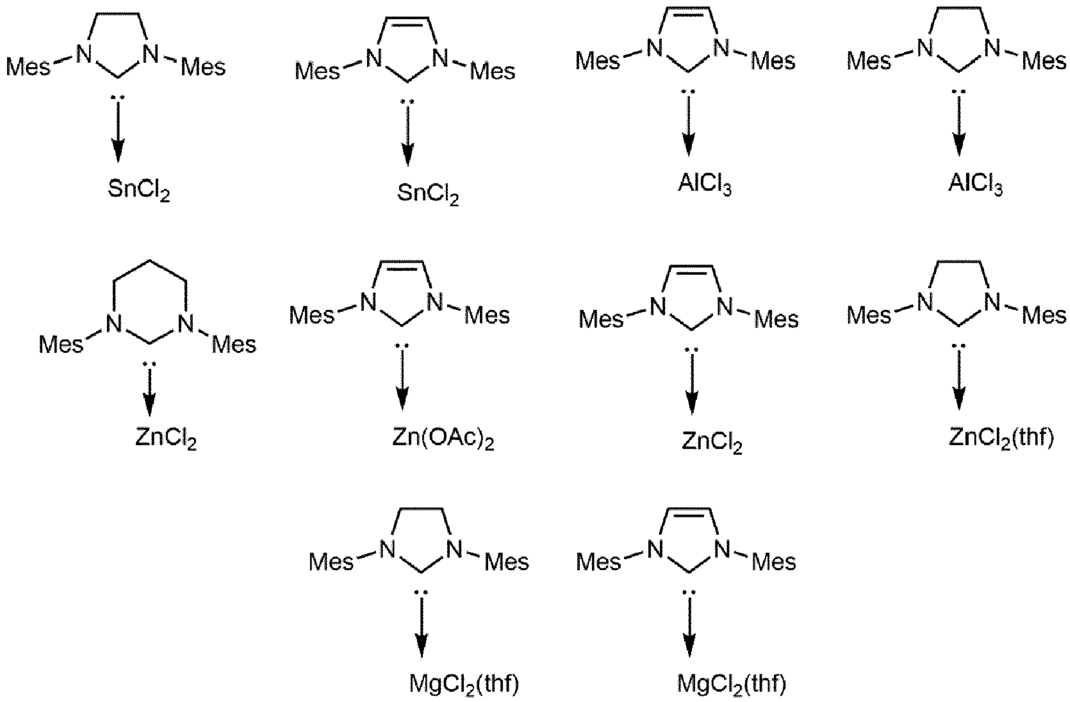

(XI)

Examples for NHC metal complexes [Chem. Eur. J., 2009, 15, 3103-3109; Eur. J. Inorg. Chem., 2009, 1970-1976; Polym. Chem., 2013, 4, 4172-4181] are summarized in Figure (XI).

*Lewis acid (L)*

As used herein, the term "Lewis acid" follows the definition given by IUPAC as a molecular entity (and the corresponding chemical species) that is an electron-pair acceptor and therefore able to react with a Lewis base to form a Lewis adduct, by sharing the electron pair furnished by the Lewis base. Hence, the Lewis acid catalyst may be a metal ion or a metal ion complex within this definition. The corresponding Lewis base that accompanies the Lewis acid catalyst is preferably of low nucleophilicity. Examples include bromide, iodide, tetraphenylborate, hexafluorophosphate, triflate (trifluoromethanesulfonate) and tosylate (p-tolylsulfonate). Particularly preferred nucleophiles are characterised by a low nucleophilicity with a value on the CH3I scale (J. Am. Chem. Soc. 99:24 (1977) 7968) of ≥ 2.0, more preferred of ≥ 4.0. In another embodiment of the method according to the invention, the Lewis acid catalyst is a metal ion or a metal ion complex selected from the group comprising
Li(I), Na(I), K(I), Rb(I), Cs(I), Ag(I), Au(I),
Mg(II), Ca(II), Sr(II), Ba(II), Dy(II), Yb(II), Cu(II), Zn(II), V(II), Mo(II), Mn(II), Fe(II), Co(II) Ni(II), Pd(II), Pt(II), Ge(II), Sn(II),
Sc(III), Y(III), La(III), Ce(III), Pr(III), Nd(III), Sm(III), Eu(III), Gd(III), Tb(III), Dy(III), Ho(III), Er(III), Tm(III), Yb(III), Lu(III), Hf(III), Nb(III), Ta(III), Cr(III), Ru(III), Os(III), Rh(III), Ir(III), Al(III), Ga(III), In(III), Tl(III), Ge(III),
Ce(IV), Ti(IV), Zr(IV), Hf(IV), Nb(IV), Mo(IV), W(IV), Ir(IV), Pt(IV), Sn(IV), Pb(IV), Nb(V), Ta(V), P(V), Sb(V), Bi(V),
Mo(VI), W(VI).

In the metal ion complex, an appropriately chosen ligand, such as phosphine, phosphite, arsenite, alkyl, acetylacetonate may be coordinated to the vacant coordination sites at the metal, whereby at least one coordination site remains available for binding of a Lewis base. The coordination site for binding of a Lewis base may also be created in the reaction mixture, e.g., by dissociation of a weakly coordinating ligand.
Preferred counter-anions are anions, which are weakly coordinating to the metal ion or metal ion complex. Examples for preferred anions are selected from the group comprising chloride, bromide, iodide, tetrafluoroborate, [BR4]-, [AlR4]-, [GaR4]-, [InR4]-, wherein R represents hydrogen, a linear or branched, optionally heteroatom-including C1- to C22-alkyl rest, a linear or branched, mono- or polysubstituted, optionally heteroatom-including C1- to C22-alkenyl rest, a mono- or polysubstituted, optionally heteroatom-including C6- to C18-aryl rest, member(s) of a saturated or unsaturated, optionally heteroatom-including 4- to 7-membered ring or polycyclic system, and each R can be different, ROSO3- and RSO3-, whereby R has the above mentioned meaning, and RSO3-is for example tosylate (p-tolylsulfonate) or triflate (trifluoromethanesulfonate).

In another embodiment of the method according to the invention the Lewis acid is one or more compound(s) and selected from the group consisting of LiCl, LiBr, LiI, MgCl2, MgBr2, MgI2, SmI3, preferred LiCl and LiBr, and most preferred LiCl.

Examples of stibonium salts include SbR14Br, SbR13R2Br, SbR12R22Br, SbR1R23Br; examples of phosphonium salts include PR14Br, PR13R2Br, PR12R22Br, PR1R23Br. R1 may be a mono, bi- or tri-functional aromatic ring, R2 may be an aliphatic chain (linear or branched) or functionalized alicyclic fragment. Preferred stibonium salts are SbPhn(n-Bu)4-nBr, SbPhn(Cy)4-nBr (Cy = cyclohexyl), with n = 0, 1, 2, 3, 4. Preferred phosphonium salts are PPhn(n-Bu)4-nBr, PPhn(Cy)4-nBr (Cy = cyclohexyl), with n = 0, 1, 2, 3, 4.

In another embodiment of the present invention, the Lewis acidic catalyst is combined with a bromide, iodide or RSO4- and/or RSO3- salt as co-catalyst, the rest R representing an organic rest. In one embodiment of the method according to the invention, the catalyst is present in an amount of ≥ 0.0001 to ≤ 0.1 equivalents relative to the epoxy groups (≥ 0.01 to ≤ 10 mol-%), preferably in an amount of ≥ 0.001 to ≤ 0.05 equivalents relative to the epoxy groups (≥ 0.1 to ≤ 5 mol-%), more preferred ≥ 0.01 to < 0.04 equivalents relative to the epoxy groups (≥ 1 to ≤ 4 mol-%), based on the theoretical yield of polyoxazolidinone.
In a preferred embodiment of the invention the Lewis acid is one or more compound(s) and selected from the group consisting of LiCl, LiBr, LiI, MgCl2, MgBr2, MgI2, SmI3, preferred LiCl and LiBr, and most preferred LiCl.

In a preferred embodiment of the invention the molar ratio of Lewis acid to the N-heterocyclic carbene is from 1 to 20 until 20 to 1, preferably from 1 to 5 until 5 to 1, more preferably from 1 to 2 or until 2 to 1.

The invention is further directed to a process for the production of an oxazolidinone compound, preferably a polyoxazolidinone compound, by reacting an isocyanate compound, preferably a polyisocyanate compound with an epoxide compound, preferably a polyepoxide compound, in the presence of catalysts wherein the N-heterocyclic carbene and the Lewis acid (L) are used as catalysts as described above.

In a preferred embodiment the invention is directed to a process for the production of polyoxazolidinones by reacting polyisocyanate compound with polyepoxide compound, in the presence of catalysts wherein the N-heterocyclic carbene and a Lewis acid (L) are used as catalysts.

*Isocyanate compound*

In an embodiment of the invention a monoisocyanate compound and/or a polyisocyanate compound can be used as an isocyanate compound for the production of the polyoxazolidinone compound.

*Monoisocyanate compound*

As used herein, the term "monoisocyanate compound " is meant to denote compounds having one isocyanate group (isocyanate-terminated biurets, isocyanurates, uretdiones, and isocyanate-terminated prepolymers)

In an embodiment of the invention the monoisocyanate compound is at least one compound selected from the group consisting of, cyclohexyl isocyanate, ω-chlorohexamethylene isocyanate, 2-ethyl hexyl isocyanate, n-octyl isocyanate, dodecyl isocyanate, stearyl isocyanate, methyl isocyanate, ethyl isocyanate, butyl isocyanate, isopropyl isocyanate, octadecyl isocyanate, 6-chloro-hexyl isocyanate, cyclohexyl isocyanate, 2,3,4-trimethylcyclohexyl isocyanate, 3,3,5-trimethylcyclohexyl isocyanate, 2-norbornyl methyl isocyanate, decyl isocyanate, dodecyl isocyanate, tetradecyl isocyanate, hexadecyl isocyanate, octadecyl isocyanate, 3-butoxypropyl isocyanate, 3-(2-ethylhexyloxy)-propyl isocyanate, (trimethylsilyl)isocyanate, phenyl isocyanate, ortho-, meta-, para-tolyl isocyanate, chlorophenyl isocyanate (2,3,4-isomers), dichlorophenyl isocyanate, 4-nitrophenyl isocyanate, 3-trifluoromethylphenyl isocyanate, benzyl isocyanate, dimethylphenylisocyanate (technical mixture and individual isomers), 4-dodecylphenylisocyanat, 4-cyclohexyl-phenyl isocyanate, 4-pentylphenyl isocyanate, 4-tert-butyl phenyl isocyanate, 1-naphthyl isocyanate.
In a preferred embodiment of the invention the monoisocyanate compound is selected from the group consisting of 4-isopropylphenyl isocyanate, and p-tolyl isocyanate.

A mixture of two or more of the aforementioned monoisocyanate compounds can also be used.

*Polyisocyanate compounds*

As used herein, the term "polyisocyanate compound" is meant to denote compounds having two or more isocyanate groups (isocyanate-terminated biurets, isocyanurates, uretdiones, and isocyanate-terminated prepolymers).

In an embodiment of the method according to the invention, the isocyanate compound is a polyisocyanate compound and the polyisocyanate compound is at least one compound selected from the group consisting of tetramethylene diisocyanate, 1,6-diisocyanatohexane (HDI), 2-methylpentamethylene diisocyanate, 2,2,4-trimethyl-hexamethylene diisocyanate (THDI), dodecanemethylene diisocyanate, 1,4-diisocyanatocyclohexane, 3-isocyanatomethyl-3,3,5-trimethylcyclohexyl isocyanate (isophorone diisocyanate, IPDI), diisocyanatodicyclohexylmethane (H12-MDI), diphenylmethane diisocyanate (MDI), 4,4'-diisocyanato-3,3'-dimethyldicyclohexylmethane, 4,4'-diisocyanato-2,2-dicyclohexyl propane, poly(hexamethylene diisocyanate), octamethylene diisocyanate, tolylene-α,4-diisocyanate, poly(propylene glycol) tolylene-2,4-diisocyanate terminated, poly(ethylene adipate) tolylene-2,4-diisocyanate terminated, 2,4,6-trimethyl-1,3-phenylene diisocyanate, 4-chloro-6-methyl-1,3-phenylene diisocyanate, poly[1,4-phenylene diisocyanate-co-poly(1,4-butanediol)] diisocyanate, poly(tetrafluoroethylene oxide-co-difluoromethylene oxide) α,ω-diisocyanate, 1,4-diisocyanatobutane, 1,8-diisocyanatooctane, 1,3-bis(1-isocyanato-1-methylethyl)benzene, 3,3 '-dimethyl-4,4'-biphenylene diisocyanate, naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and α,α,α',α'-tetramethyl-, m-, or -p-xylene diisocyanate (TMXDI) or biurets, isocyanurates or uretdiones of the aforementioned isocyanates.

More preferred, the polyisocyanate compound is selected from the group comprising of tolylene-α,4-diisocyanate, poly(propylene glycol) tolylene-2,4-diisocyanate terminated, 2,4,6-trimethyl-1,3-phenylene diisocyanate, 4-chloro-6-methyl-1,3-phenylene diisocyanate, 3,3'-dimethyl-4,4'-biphenylene diisocyanate, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and α,α,α',α'-tetramethyl-, m-, or -p-xylene diisocyanate (TMXDI), diphenylmethane diisocyanate (MDI), naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers.

And most preferred the polyisocyanate compound is selected from the group consisting of diphenylmethane diisocyanate (MDI), naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers.
A mixture of two or more of the aforementioned polyisocyanate compounds can also be used.

*Aliphatic polyisocyanate*

In an embodiment of the method according to the invention, the aliphatic polyisocyanate compound is at least one compound and is selected from the group consisting of tetramethylene diisocyanate, 1,6-diisocyanatohexane (HDI), 2-methylpentamethylene diisocyanate, 2,2,4-trimethyl-hexamethylene diisocyanate (THDI), dodecanemethylene diisocyanate, 1,4-diisocyanatocyclohexane, 3-isocyanatomethyl-3,3,5-trimethylcyclohexyl isocyanate (isophorone diisocyanate, IPDI), diisocyanatodicyclohexylmethane (H12-MDI), 4,4'-diisocyanato-3,3'-dimethyldicyclohexylmethane, 4,4'-diisocyanato-2,2-dicyclohexyl propane, poly(hexamethylene diisocyanate), and octamethylene diisocyanate, or biurets, isocyanurates or uretdiones of the aforementioned isocyanates.

More preferred, the aliphatic polyisocyanate compound is selected from the group comprising of tetramethylene diisocyanate, 1,6-diisocyanatohexane (HDI), dodecanemethylene diisocyanate, 1,4-diisocyanatocyclohexane, 3-isocyanatomethyl-3,3,5-trimethylcyclohexyl isocyanate (isophorone diisocyanate, IPDI), and diisocyanatodicyclohexylmethane (H12-MDI).

A mixture of two or more of the aliphatic polyisocyanate compounds can also be used.

*Epoxide compound (B)*

In an embodiment of the invention a monoepoxide compound and/or a polyepoxide compound can be used as an epoxide compound for the production of the polyoxazolidinone compound.

*Monoepoxide compound*

In an embodiment of the method according to the invention the monoepoxide compound is at least one compound and is selected from the group consisting of 4-tert-butylphenyl glycidyl ether, phenyl glycidyl ether, 1-naphthyl glycidyl ether, 2-naphthyl glycidyl ether, 4-chlorophenyl glycidyl ether, 2,4,6-trichlorophenyl glycidyl ether, 2,4,6-tribromophenyl glycidyl ether, pentafluorophenyl glycidyl ether, cyclohexyl glycidyl ether, benzyl glycidyl ether, glycidyl benzoate, glycidyl acetate, glycidyl cyclohexylcarboxylate, methyl glycidyl ether, ethyl glycidyl ether, butyl glycidyl ether, hexyl glycidyl ether, 2-ethylhexyl glycidyl ether, octyl glycidyl ether, C10 - C18 alkyl glycidyl ether, allyl glycidyl ether, ethylene oxide, propylene oxide, styrene oxide, 1,2-butene oxide, 2,3-butene oxide, 1,2-hexene oxide, oxides of C10 - C18 alpha-olefins, cyclohexene oxide, vinylcyclohexene monoxide, limonene monoxide, butadiene monoepoxide and/or N-glycidyl phthalimide and/or n-hexylisocyanate, 4-tert-butylphenyl glycidyl ether

In a preferred embodiment of the invention, the monoepoxide compound is selected from the group consisting of 4-tert-butylphenyl glycidyl ether, and phenyl glycidyl ether.

*Polyepoxide compound*

As used herein, the term "polyepoxide compound" is meant to denote compounds having two or more epoxide groups

In a preferred embodiment of the invention, the epoxide compound is a polyepoxide compound and the polyepoxide compound is at least one compound selected from the group consisting of resorcinol diglycidyl ether, neopentyl glycol diglycidyl ether, 1,6-hexanediol diglycidyl ether, 1,4-butandiol diglycidyl ether, hydrogenated bisphenol A diglycidyl ether, bisphenol A diglycidyl ether, bisphenol-F diglycidyl ether, bisphenol-S diglycidyl ether, 9,9-bis(4-glycidyloxy phenyl)fluorine, tetrabromo bisphenol A diglycidyl ether, tetrachloro bisphenol A diglycidyl ether, tetramethyl bisphenol A diglycidyl ether, tetramethyl bisphenol-F diglycidyl ether, tetramethyl bisphenol-S diglycidyl ether, diglycidyl terephthalate, diglycidyl o-phthalate, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, butadiene diepoxide, vinylcyclohexene diepoxide, limonene diepoxide, the diepoxides of double unsaturated fatty acid C1 - C18 alkyl esters, 2-dihydroxybenzene diglycidyl ether, 1,4-dihydroxybenzene diglycidyl ether, 4,4'-(3,3,5-trimethylcyclohexyliden)bisphenyl diglycidyl ether and diglycidyl isophthalate.

More preferred the polyepoxide compound is selected from the group consisting of resorcinol diglycidyl ether, bisphenol A diglycidyl ether, and bisphenol F diglycidyl ether.

Most preferred the bisepoxide compound is selected from the group consisting of bisphenol A diglycidyl ether, and bisphenol F diglycidyl ether.

A mixture of two or more of the aforementioned polyepoxide compounds can also be used.

*Aliphatic polyepoxides*

As used herein, the term "aliphatic polyepoxide compound" is meant to denote compounds having two or more epoxide groups and no aromatic moieties.

In a preferred embodiment of the invention, the aliphatic polyepoxide compound is one or more compound(s) and is selected from the group consisting of neopentyl glycol diglycidyl ether, 1,6-hexanediol diglycidyl ether, hydrogenated bisphenol A diglycidyl ether, glycerol polyglycidyl ether, trimethylolpropane polyglycidyl ether, pentaerythritol polyglycidyl ether, diglycerol polyglycidyl ether, sorbitol polyglycidyl ether, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether and/or polybutadiene diglycidyl ether.

Most preferred the aliphatic polyepoxide compound is one or more compound(s) and is selected from the group consisting of 1,6-hexanediol diglycidyl ether, ethylene glycol diglycidyl ether, polyethylene glycol diglycidyl ether, diethylene glycol diglycidyl ether.

A mixture of two or more of the aforementioned aliphatic polyepoxide compounds can also be used.

The molecular weight of the obtained thermoplastic polyoxazolidinone is determined by the molar ratio of the polyepoxide compound relative to polyisocyanate compound.

The molar ratio of polyepoxide compound to polyisocyanate compound is preferably in the range from 1:2 to 2:1, more preferably in the range from 45:55 to 55/45 and even more preferably in the range 47.8:52.2 to 52.2:47.8.

*Solvent*

The reaction according to the invention is performed in high boiling non-protic halogenated aromatic solvents, high-boiling non-protic aliphatic heterocyclic solvents, halogenated aromatic or aliphatic heterocyclic solvents.

Suitable solvents are for example organic solvents such as linear or branched alkanes or mixtures of alkanes, toluene, xylene and the isomeric xylene mixtures, mesitylene, mono or polysubstituted halogenated aromatic solvents or halogenated alkane solvents, for example chlorobenzene, dichlorobenzene, dichloromethane, dichloroethane, tetrachloroethane, linear or cyclic ether such as tetrahydrofurane (THF) or methyl-tert-butylether (MTBE) or higher ether of the repeating unit $R'-(CH_2CH_2O)_n-R$ with n>1 where R and R' display a aliphatic moiety like methyl, ethyl, n-propyl, 2-propyl, n-butyl, 2-butyl, 1,1-dimethylethyl, linear or cyclic ester, or polar aprotic solvents such as 1,4-dioxane, acetonitrile, *N,N*-dimethylformamide (DMF), *N,N*-dimethylacetamide (DMAc), dimethylsulfoxide (DMSO), cyclic carbonate, such as ethylencarbonate or propylencarbonate, nitrobenzene, *N*-methylpyrrolidone (NMP), *N,N'*-dimethylethylenurea, sulfolane, tetramethylurea, *N,N'*-dimethylethylenurea, 1,3-dimethyl-3,4,5,6-tetrahydro-2(1H)-pyrimidinone (DMPU) or mixtures of the above mentioned solvents and/or with other solvents. Preferred solvents (E) are 1,2-dichlorobenzene, sulfolane, *N,N'*-dimethylethylenurea and *N*-methylpyrrolidone (NMP).

The reaction of the epoxide compound, preferably the polyepoxide compound, with the isocyanate compound may be carried out in a continuous process, in a batch process or in a semi-batch process.

In one embodiment of the method according to the invention, the process is carried out continuously. That means in this continuous process the epoxide compound, preferably the polyepoxide compound, isocyanate compound, preferably the polyisocyanate compound, the catalyst, and the solvent are continuously added whereas a part of the reaction mixture is continuously removed from the reactor. A residence-time reactor may be added after the continuous reactor in order to complete the reaction.

In an alternative embodiment of the method according to the invention, the process is carried out as a batch process. In this batch process the epoxide compound, preferably the polyepoxide compound, the isocyanate compound, preferably the polyisocyanate compound, the catalyst, and the solvent are charged in a reactor and the reaction runs until full conversion is obtained.

In an alternative embodiment of the method according to the invention, a semi-batch process is preferred. The epoxide compound, preferably the polyepoxide compound, is preferably mixed with a catalyst and optionally a solvent in a reactor and the isocyanate compound, preferably the polyisocyanate compound, is continuously added to the reaction as pure material or in solution. The added amount of the isocyanate compound, preferably the polyisocyanate compound, is calculated so that the desired molecular weight is achieved. In an alternative embodiment, the isocyanate compound, preferably the polyisocyanate compound, is charged in the reactor along with the catalyst and optionally a solvent while the epoxide compound, preferably the polyepoxide compound, are continuously added to the reaction mixture as a pure substance or in solution.

In an alternative embodiment of the method according to the invention, the process for producing oxazolidinone, preferably polyoxazolidinone, comprising in the first step the reaction of a isocyanate compound, preferably a polyisocyanate compound, with a epoxide compound, preferably a polyepoxide compound in the presence of an N-heterocyclic carbene and a Lewis acid (L) catalyst and a monofunctional isocyanate and/or monofunctional epoxide in a solvent forming an intermediate compound and in a second step the reaction of an alkylene oxide with the intermediate compound.

In a further alternative embodiment of the method according to the invention, the process for producing oxazolidinone, preferably a polyoxazolidinone comprising copolymerization of a isocyanate compound, preferably a polyisocyanate compound, with a epoxide compound, preferably a polyepoxide compound in the presence the an N-heterocyclic carbene and a Lewis acid (L) catalyst and a monofunctional isocyanate and/or monofunctional epoxide in a solvent, wherein the process comprises the first step of placing the solvent and the catalyst in a reactor to provide a mixture, and adding in a second step the isocyanate compound, preferably a polyisocyanate compound, the epoxide compound, preferably a polyepoxide compound and the a monofunctional isocyanate and/or monofunctional epoxide to the mixture resulting from the first step.

In an alternative embodiment the isocyanate compound, preferably the polyisocyanate compound, is added to the epoxide compound, preferably the polyepoxide compound, in a continuous or step-wise manner with two or more individual addition steps in the step-wise addition. This is to be understood in such a way that during the course of the reaction the isocyanate compound, preferably the polyisocyanate compound, is added continuously or in the aforementioned step-wise manner. Included is also the case that the isocyanate compound, preferably the polyisocyanate compound, is added via a pump, dripping funnel or other continuous or semi-continuous devices where the epoxide compound, preferably the polyepoxide compound, is brought into the reaction mixture in slow manner. Although some after-reaction time may be given to the reaction system, the reaction should be essentially complete shortly after the end of the addition of the isocyanate compound.

In a preferred embodiment the reaction temperature of the inventive process is at least 80°C to 300°C, preferably in the range from 150°C to 250°C, more preferably in the range from 170°C to 220°C.

The reaction time for the polymerisation is for example 0.05 to 120 hours, preferably 0.5 to 48 hours, more preferred 1 to 24 hours. The reaction time is the time wherein the epoxide, preferably the polyepoxide compound, the isocyanate compound, preferably the polyisocyanate compound, the catalyst and the solvent are in direct contact at the reaction temperature.

As a further embodiment of the invention an excess of a monoisocyanate compound and/or a monoepoxide compound, preferably a monoepoxide compound, is added as chain regulator to the reaction mixture after the reaction between bisepoxide and diisocyanate has been completed. Without being bound to a theory, the terminal epoxide groups or the terminal isocyanate groups resulting from the reaction of the bisepoxide and the diisocyanate will be converted to inert end groups by reaction with the regulator. The excess amount of regulator is subsequently removed from the product, e.g., by extraction, precipitation, distillation, stripping or thin film evaporation.

Preferably, the molar amount of monoepoxide compound and monoisocyanate compound added as compound (C) fulfils certain criteria with respect to the molar amount of bisepoxide compound (B) and diisocyanate compound (A). The ratio r is defined as the absolute value of the molar amount of compound (C) ($n_C$) to the difference between the molar amount of bisepoxide compound (B) ($n_{bisepoxide}$) and the molar amount of diisocyanate compound (A) ($n_{diisocyanate}$) according to the following formula (1)

$$r = \left| n_C / (n_{bisepoxide} - n_{diisocyanate}) \right| \qquad (1)$$

is preferably in the range of ≥ 1.5 to ≤ 2.5, more preferably in the range of ≥ 1.9 to ≤ 2.1, and particularly preferred in the range of ≥ 1.95 to ≤ 2.05. Without being bound to a theory, all epoxide groups and all isocyanate groups will have reacted at the end of the reaction, when such an amount of chain regulator is being used.

*Product-bv-process claim*

Another aspect of the present invention is polyoxazolidinone compound (A), obtainable by the reaction of an aliphatic polyisocyanate compound with the polyepoxide compound in the presence of the inventive catalyst, wherein the theoretical number average molecular weights Mn of the polyoxazolidinon is preferentially ≥ 5000 to ≤ 500’000 g/mol, more preferred ≥ 5’000 to ≤ 100’000 g/mol and even more preferred ≥ 5’000 to ≤ 50’000 g/mol as determined with gel permeation chromatography (GPC), wherein the GPC method corresponds to the System A or System B disclosed in the experimental part.

Another alternative aspect of the present invention is polyoxazolidinone compound (B), obtainable by the reaction of a polyisocyanate compound with the aliphatic polyepoxide compound in the presence of the inventive catalyst, wherein the theoretical number average molecular weights Mn of the polyoxazolidinon is preferentially ≥ 5000 to ≤ 500’000 g/mol, more preferred ≥ 5’000 to ≤ 100’000 g/mol and even more preferred ≥ 5’000 to ≤ 50’000 g/mol as determined with gel permeation chromatography (GPC), wherein the GPC method corresponds to the System A or System B disclosed in the experimental part.

Another alternative aspect of the present invention is polyoxazolidinone compound (C), obtainable by the reaction of an aliphatic polyisocyanate compound with the aliphatic polyepoxide compound in the presence of the inventive catalyst, wherein the theoretical number average molecular weights Mn of the polyoxazolidinon is preferentially ≥ 5000 to ≤ 500’000 g/mol, more preferred ≥ 5’000 to ≤ 100’000 g/mol and even more preferred ≥ 5’000 to ≤ 50’000 g/mol as determined with gel permeation chromatography (GPC), wherein the GPC method corresponds to the System A or System B disclosed in the experimental part.

Another aspect of the present invention is the use of the inventive catalysts for the production of oxazolidinone compounds, preferably polyoxazolidinone compounds.

In an embodiment of the method according to the invention, the method further comprises the step of isolating the thermoplastic polyoxazolidinone obtained by the reaction, heating the polyoxazolidinone and pressing the polyoxazolidinone into a desired shape.

The present invention further relates to a spun fiber, comprising a polyoxazolidinone according to the invention and a textile, comprising such a spun fiber.

The method according to the invention is suited for the synthesis of oxazolidinones with interesting properties for use, for example, as pharmaceutics or antimicrobiotics.

Polyoxazolidinones obtained by the method according to the invention are particularly suited as polymer building blocks in polyurethane chemistry. For example, epoxy-terminated oligomeric oxazolidinones (oligooxazolidinones) may be reacted with polyols or polyamines to form foams or thermosets. Such epoxy-terminated oligomeric oxazolidinones are also suited for the preparation of composite materials. Epoxy-terminated oligomeric oxazolidinones (oligooxazolidinones) may also be reacted with their NCO-terminated counterparts to form high molecular weight polyoxazolidinones, which are useful as transparent, high temperature-stable materials. Polyoxazolidinones with high molecular weight obtained by the method according to the invention are particularly suited as transparent, high temperature-stable materials.

The conventional additives for these, such as fillers, UV stabilizers, heat stabilizers, antistatics and pigments, can also be added in the conventional amounts to the polyoxazolidinones according to the invention; the mould release properties, the flow properties and/or the flame resistance can optionally also be improved by addition of external mould release agents, flow agents and/or flameproofing agents (e.g. alkyl and aryl phosphites and phosphates, alkyl- and arylphosphanes) and low molecular weight carboxylic acid alkyl and aryl esters, halogen compounds, salts, chalk, quartz flour, glass fibres and carbon fibres, pigments and a combination thereof. Such compounds are described e.g. in WO 99/55772, p. 15 - 25, and in the corresponding chapters of the "Plastics Additives Handbook" (ed. Hans Zweifel, 5th edition 2000, Hanser Publishers, Munich).

The polyoxazolidinones obtained according to the current invention have excellent properties regarding stiffness, hardness and chemical resistance.

They are also useful in polymer blends with other polymers such as polystyrene, high-impact polystyrene (polystyrene modified by rubber for toughening, usually polybutadiene), copolymers of styrene such as styrene-acrylonitrile copolymer (SAN), copolymers of styrene, alpha-methylstyrene and acrylonitrile, styrene - methyl methacrylate copoylmers, styrene - maleic anhydride copolymers, styrene - maleimide copolymers, styrene - acrylic acid copolymers, SAN modified by grafting rubbers for toughening such as ABS (acrylonitrile-butadiene-styrene polymer), ASA (acrylonitrile-styrene-acrylate), AES (acrylonirile-EPDM-styrene), ACS (acrylonitrile-chlorinated polyethylene-stryrene) polymers, copolymers of styrene, alpha-methylstyrene and acrylonitrile modified with rubbers such as polybutadiene or EPDM, MBS/MABS (methyl methacrylate - styrene modified with rubber such as polybutadiene or EPDM), aromatic polyesters such as polyethylene terephthalate (PET), polybutylene terephthalate (PBT), polytrimethylene terephthalate (PTT), aliphatic polyamides such as PA6, PA6,6, PA4,6, PA 11 or PA 12, polylactic acid, aromatic polycarbonates such as the polycarbonate of bisphenol A, co-polycarbonates such as co-polycarbonates of bisphenol A and bisphenol TMC, polymethylmethacrylate (PMMA), polyvinylchloride, polymethyleneoxide (POM), polyphenylene ether, polyphenylene sulphide (PPS), polysulfones, polyetherimide (PEI), polyethylene, polypropylene.

They are also useful for blends in combination with the above polymers or others, for example blends of polycarbonate and ABS, polycarbonate and PET, polycarbonate and PBT, polycarbonate and ABS and PBT or polycarbonate and ABS and PBT.

The properties of the polyoxazolidinones according to this invention or blends with the above-mentioned polymers or others can also be modified by fillers such as glass fibers, hollow or solid glass spheres, silica (for example fumed or precipitated silica), talcum, calcium carbonate, titanium dioxide, carbon fibers, carbon black, natural fibers such as straw, flax, cotton or wood fibers.

Polyoxazolidinones can be mixed with any usual plastics additive such as antioxidants, light stabilizers, impact modifiers, acid scavengers, lubricants, processing aids, anti-blocking additives, slip additives, antifogging additives, antistatic additives, antimicrobials, chemical blowing agents, colorants, optical brighteners, fillers and reinforcements as well as flame retardant additives.

Suitable impact modifiers are typically high molecular weight elastomeric materials derived from olefins, monovinyl aromatic monomers, acrylic and methacrylic acids and their ester derivatives, as well as conjugated dienes. The polymers formed from conjugated dienes can be fully or partially hydrogenated. The elastomeric materials can be in the form of homopolymers or copolymers, including random, block, radial block, graft, and core-shell copolymers. Combinations of impact modifiers can be used.

A specific type of impact modifier is an elastomer-modified graft copolymer comprising (i) an elastomeric (i.e., rubbery) polymer substrate having a Tg less than 10°C, more specifically less than -10°C, or more specifically -40° to 80°C, and (ii) a rigid polymeric shell grafted to the elastomeric polymer substrate. Materials suitable for use as the elastomeric phase include, for example, conjugated diene rubbers, for example polybutadiene and polyisoprene; copolymers of a conjugated diene with less than 50 wt% of a copolymerizable monomer, for example a monovinylic compound such as styrene, acrylonitrile, n-butyl acrylate, or ethyl acrylate; olefin rubbers such as ethylene propylene copolymers (EPR) or ethylene-propylene-diene monomer rubbers (EPDM); ethylene-vinyl acetate rubbers; silicone rubbers; elastomeric C1-8 alkyl (meth)acrylates; elastomeric copolymers of CI-8 alkyl (meth)acrylates with butadiene and/or styrene; or combinations comprising at least one of the foregoing elastomers, materials suitable for use as the rigid phase include, for example, monovinyl aromatic monomers such as styrene and alpha-methyl styrene, and monovinylic monomers such as acrylonitrile, acrylic acid, methacrylic acid, and the C1-C6 esters of acrylic acid and methacrylic acid, specifically methyl methacrylate.

Specific exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

Impact modifiers are generally present in amounts of 1 to 30 wt%, specifically 3 to 20 wt%, based on the total weight of the polymers in the flame retardant composition. An exemplary impact modifier comprises an acrylic polymer in an amount of 2 to 15 wt%, specifically 3 to 12 wt%, based on the total weight of the flame retardant composition.

The composition may also comprise mineral fillers. In an embodiment, the mineral fillers serve as synergists. The synergist facilitates an improvement in the flame retardant properties when added to the flame retardant composition over a comparative polyoxazolidinone composition that contains all of the same ingredients in the same quantities except for the synergist. Examples of mineral fillers are mica, talc, calcium carbonate, dolomite, wollastonite, barium sulfate, silica, kaolin, feldspar, barytes, or the like, or a combination comprising at least one of the foregoing mineral fillers. The mineral filler may have an average particle size of 0.1 to 20 micrometers, specifically 0.5 to 10 micrometers, and more specifically 1 to 3 micrometers. An exemplary mineral filler is talc having an average particle size of 1 to 3 micrometers. The mineral filler is present in amounts of 0.1 to 20 wt%, specifically 0.5 to 15 wt%, and more specifically 1 to 5 wt%, based on the total weight of the flame retardant composition. The polyoxazolidinones can also be colored with a whole range of soluble organic dyes and with pigment dyes, which can be either organic or inorganic.

Further possible uses of the polyoxazolidinones according to the invention are:

01. Housing for electrical appliances (e.g. household appliances, computers, mobile phones, display screens, television, ...), including transparent or translucent housing parts like lamp covers.

02. Light guide panels and BLUs

03. Optical Data Storage (CD, DVD, Blu-ray Discs)
04. electrically insulating materials for electrical conductors, for plug housings and plug connectors, carrier material for organic photoconductors, Chip boxes and chip supports, fuse encapsulation 05. Static dissipative / electrically conductive formulations for use in explosion protection applications and others with respective requirements
06. Optics, diffusers, reflectors, light guides as well as housings for LED and conventional Lighting, e.g. streetlights, industrial lamps, searchlights, traffic lights, ...
07. Thermally conductive formulations for thermal management applications like heatsinks.
08. Applications for Automotive and other Transportation vehicles (cars, buses, trucks, railway, aircrafts, ships) as glazing, also safety glazing, lighting (e.g. headlamp lenses, tail lights, turn signals, back-up lights, fog lights; bezels and reflectors), sun and panoramic roofs, cockpit canopies, cladding of railway or other cabins, Windscreens, interiors and exteriors parts (e.g. instrument covers, consoles, dashboards, mirror housings, radiator grilles, bumpers, spoilers),
09. EVSE and batteries
10. Metal substitution in gears, seals, supporting rings
11. Roof structures (e.g. for sports arenas, stations, conservatories, greenhouses)
12. windows (including theft-proof windows and projectile-resistant windows, teller's windows, barriers in banks),
13. partition walls
14. solar panels
15. Medical devices (components of blood pumps, auto-injectors and mobile medical-injection pumps, IV access devices, renal therapy and inhalation devices (such as nebulizers, inhalers) sterilisable surgical instruments, medical implants, oxygenators, dialyzers, ...)
16. Foodcontact applications (tableware, dinnerware, glasses, tumblers, food containers, institutional food trays, water bottles, water filter systems)
17. sports articles, such as, e.g. slalom poles or ski boot buckles.
18. household articles, such as e.g. kitchen sinks and letterbox housings.
19. safety applications (glasses, visors or optical corrective glasses, helmets, visors, riot gear (helmets and shields), safety panes)
20. Sunglasses, swimming goggles, SCUBA masks
21. Signs, displays, poster protection
22. Lightweight luggage
23. water fitting, pump impellors, thin hollow fibres for water treatment
24. Industrial pumps, valves and seals, connectors
25. Membranes
26. Gas separation
27. Coating applications (e.g. anticorrosion paint, powder coating)

## Examples

The present invention will be further described with reference to the following examples without wishing to be limited by them.

*Isocyanate compound*

I-1: HDI 1,6-diisocyanatohexane, 99%, Covestro AG, Germany
I-2: MDI 4,4-Methylene diphenyl diisocyanate (MDI 44), 98 %, Covestro AG, Germany
I-3: TDI 2,4-Toluenediisoyanate >99%2,4-Isomer, Covestro AG, Germany
I-4: IPDI Isophorone diisocyanate mixture of isomers) TCI, >99%, was used as received
I-5: 12H-MDI 1-Isocyanato-4-[(4-isocyanatocyclohexyl)methyl]cyclohexan (, mixture of isomers) TCI, >90%, was dried 18 h over $CaH_2$ and was distilled under reduced pressure.

*Epoxide compound*

| | |
|---|---|
| E-1 | BADGE 2-[[4-[2-[4-(Oxiran-2-ylmethoxy)phenyl]propan-2-yl]phenoxy]methyl]oxirane (Bisphenol A diglycidylether), difunctional epoxide, Epikote 162 (Hexion, 98 %) was used as obtained without further purification. |
| E-2: | BDE 1,4-butandiol diglycidyl ether was received from TCI >93.0% and dried and distilled under reduced pressure from $CaH_2$. |

*Catalyst*

*Lewis acid (L)*

| | |
|---|---|
| LiCl: | Lithium chloride, purity >99%, was obtained from Sigma Aldrich or LiCl für analytische Zwecke was provided by Grüssing GmbH, 99%. |
| $MgCl_2$ | Magnesium chloride anhydrous for synthesis, ≥98%, Merck KGaA, Germany. |
| $Ph_3MePBr$ | TCI, >98% |
| 1-Methylimidazole | abcr GmbH Deutschland, 99 %, was dried and distilled from $CaH_2$ |

*N-heterocyclic carbene carboxylates*

| | |
|---|---|
| 5u-Me-CO2 | was synthesized according to the literature (Chem. Commun., 2003, 28-29) |
| 6-iPr-CO2 | was synthesized according to the literature (Chem, Eur. J., 2009, 15, 3103-3109; p. 3108) |
| 6-Mes-CO2 | was synthesized according to the literature (Chem, Eur. J., 2009, 15, 3103-3109; p. 3107-3108) |
| 5u4,5Cl-Me-I | was synthesized according to the literature (Organometallics 2007, 26, 6042-6049; p. 6047) |
| 5u-Mes-Cl | was synthesized according to the literature (Beilstein J. Org. Chem., 2007, 3, 22) |

*Solvents*

*Ortho*-dichlorobenzene (o-DCB), 99%, anhydrous, was obtained from Sigma-Aldrich, Germany Sulfolane, ≥99%, anhydrous, was obtained from Sigma-Aldrich, Germany or from abcr GmbH Deutschland, 99%.

1,3-Dimethyl-2-imidazolidinone, was obtained from TCI, >99.0%. Before use it was dried and distilled under reduced pressure from $CaH_2$ and degassed.

*N,N*-Dimethylacetamide, HPLC grade, 99.5% was obtained from Alfa Aesar.

Lithium bromide (LiBr) was obtained from abcr, 99.95%.

TDI, MDI, HDI, IPDI, LiCl, LiBr, $MgCl_2$, *N,N*-Dimethylacetamide were used as received without further purification. BADGE (Epikote 162) was used after melting at 50°C and drying over molecular sieves. 1,4-Butanediol diglycidyl ether was dried 18 h over $CaH_2$ and distilled under reduced pressure, before degassing. Sulfolane (at 35°C), o-DCB, NMP and 1,3-dimethylimidazolidin-2-one were dried for 18 h over $CaH_2$ before vacuum distillation and degassing. Alternatively, o-DCB and sulfolane were dried over molecular sieves prior to use. BPGE and PTI were distilled prior to use. Alternatively, BPGE was used as received without further purification.

Molecular sieves (3 Å, Honeywell) were activated in a vacuum oven at 200°C for 5 h prior to use.

*Characterisation of polyoxazolidinone*

IR: Solid state IR analyses were performed on a Bruker ALPHA-P IR spectrometer equipped with a diamond probe head or a Bruker Platinum ATR. The software OPUS version 6.5 or 7.2 was used for data treatment. A background spectrum was recorded against ambient air. Thereafter, a small sample of the polyoxazolidinone (2 mg) was applied to the diamond probe and the IR spectrum recorded averaging over 24 spectra obtained in the range of 4000 to 400 $cm^{-1}$ with a resolution of 4 $cm^{-1}$.

Sample preparation: The reactions were prepared under inert nitrogen atmosphere or in a $N_2$ filled glove box (Lab Master 130, MBraun, Garching, Germany). All reactions were executed with standard Schlenk technique under inert gas. After the reaction was completed the work up followed under ambient conditions.

Molecular Weight: The average chain length of the polyoxazolidinones was controlled by the molar ratio of diepoxide, diisocyanate and/or compound (D).

The formula below gives a general mathematical formula to calculate the average chain length n in the polymeric product obtained with a diisocyanate (A) and a bisepoxide (B):

$$n = (1 + q) / (1 + q - 2pq) \qquad (2)$$

with $q = nx / ny \leq 1$ and x,y = bisepoxide (B) or diisocyanate (A) and with the conversion p whereby nx and ny are the molar amounts of bisepoxide or diisocyanate, respectively.

GPC: The number average molecular weight $\overline{M}_n$ as well as the polydispersity index were determined by size exclusion chromatography in *N,N*-dimethylacetamide.

Parameters for size exclusion chromatography:

System A: 1260 Infinity System from Agilent Technologies Inc.; solvent: N,N-dimethylacetamide (HPLC grade); sample concentration: 2-3 g/L; flow rate: 0.75 mL/min; calibration: poly(methylmethacrylate), 800 g/mol < Mp > 201000 g/mol; columns: PolarSil 8x50 mm, 35°C (precolumn), PolarSil S linear 8x300 mm, 35°C; detector: refractive index, 40°C; software: Cirrus. This GPC was used to analyze examples 1 to 22.

System B: 1260 system from Agilent; solvent: N,N-dimethylacetamide with LiBr (1,7 g/L); sample concentration: 2-3 g/L; flow rate: 1,0 mL/min at 60°C; calibration: polystyrene, 370 < Mp > 2520000 g/mol and 800 < Mp >2200000 g/mol,; columns: GRAM (precolumn), GRAM 3000, GRAM 3000, GRAM 100; detector: refractive index; software: PSS WinGPC Unity. This GPC was used to analyze examples 23 to 25.

*Reactor*

Small scale reactions were conducted in 4 mL glass vials equipped with a magnetic stirring bar and sealed with a septum. The vial was placed in a heatable aluminum block with drill holes. Below a magnetic stirrer was placed. This reaction setup was used for examples 1 to 22.

Larger scale reactions were conducted in a 500 ml double-walled glass reactor with mechanical stirring. Marlotherm SH (Azelis) was used as heating medium. This reaction setup was used for examples 23 to 25.

*Oxazolidinone synthesis*

Procedure a) - Examples 1 to 10: Synthesis of polyoxazolidinone based on the reaction of 1,6-diisocyanatohexane as diisocyanate and bisphenol A diglycidyl ether as bisepoxide using various combinations of carbene carboxylate and Lewis acid as catalytic system.

The reactions shown in Table 1 entry 1 to 10 were carried out as follows: under inert gas 1 equivalent of the carbene carboxylate, 2 equivalents Lewis acid and 100 equivalents of the bisepoxide (0.2000 g, 0.588 mmol) were dissolved in sulfolane (0.75 g). The mixture was stirred at 200°C. Within 1 h a solution of 100 equivalents of diisocyanate in sulfolane (0.75 g) was added stepwise. The combined solutions were stirred for 2 h at 200°C, afterward the mixture was precipitated from propan-2-ol. The precipitate was centrifuged, the supernatant solution was decanted off and the remaining solid was dried under reduced pressure. The products were subsequently analyzed by GPC and IR.

Procedure β) - Examples 11 to 14: Synthesis of polyoxazolidinone based on the reaction of 1.6 diisocyanatohexane as diisocyanate and bisphenol A diglycidyl ether as bisepoxide, using conceivable catalysts as catalytic system

The reactions shown in table 1 were carried out as follows: under inert gas 2 equivalents of the conceivable catalyst were dissolved in sulfolane (0.5 g). The mixture was stirred at 200°C. Within 2 h a solution of 100 equivalents of the bisepoxide (0.2000 g, 0.588 mmol) and 100 equivalents of the diisocyanate in sulfolane (1.75 g) was added stepwise. The combined solutions were stirred for 1 h at 200°C, afterwards the mixture was precipitated from propan-2-ol. If a precipitate was found it was centrifuged, the supernatant solution was decanted off and the remaining solid was dried under reduced pressure. The products, if formed, were analyzed by IR spectroscopy.

The NHC structures and other conceivable molecules for comparison of the catalysts used and the corresponding abbreviation are shown in Figure (XII).

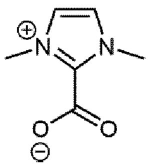

**5u-Me-CO$_2$**
1,3-Dimethyl-imidazolium-2-carboxylate

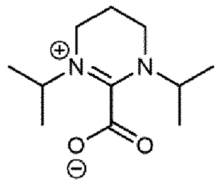

**6-iPr-CO$_2$**
1,3-Diprop-2-yl-tetrahydropyrimidinium-2-carboxylate

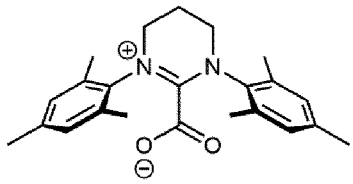

**6-Mes-CO$_2$**
1,3-Di(2,4,6-trimethyl)phenyl-tetrahydropyrimidinium-2-carboxylate

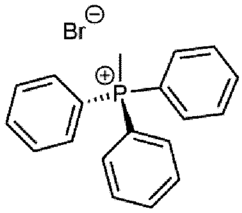

**Ph$_3$MePBr**
methyltriphenyl-phosphonium bromide

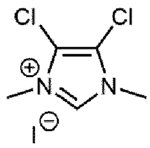

**5u4,5Cl-Me-I**
1,3-dimethyl-4,5-dichloro-imidazolium iodide

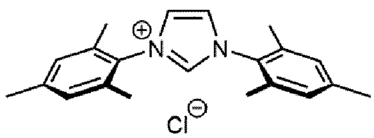

**5u-Mes-Cl**
1,3-di(2,4,6-trimethylphenyl)-imidazolium chloride

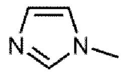

**Me-Imi**
1-methylimidazole

Figure (XII): NHC structures and other conceivable molecules for comparison applied for synthesis of oxazolidinones Table 1.

**Table 1:** Summary of examples for the synthesis of polyoxazolidinone based on the reaction of 1,6-diisocyanatohexane as diisocyanate and bisphenol A diglycidyl ether as bisepoxide, using various combinations of NHCs and Lewis acid as catalytic system, following the experimental procedure $\alpha$).

| Example | Isocyanate | Epoxy | Carbene | Lewis acid | procedure | Iso cyanurate | Mn | PDI |
|---|---|---|---|---|---|---|---|---|
| 1 | HDI | BADGE | 6-iPr-CO2 | LiCl | $\alpha$ | no | 12000 | 5.3 |
| 2 | HDI | BADGE | 6-iPr-CO2 | MgCl2 | $\alpha$ | no | 10000 | 5.4 |
| 3 (comp.) | HDI | BADGE | 6-iPr-CO2 | - | $\alpha$ | yes | - | - |
| 4 (comp.) | HDI | BADGE | - | LiCl | $\alpha$ | yes | - | - |
| 5 (comp.) | HDI | BADGE | - | MgCl2 | $\alpha$ | yes | - | - |
| 6 | HDI | BADGE | 6-Mes-CO2 | LiCl | $\alpha$ | no | 22000 | 5.4 |
| 7 (comp.) | HDI | BADGE | 6-Mes-CO2 | - | $\alpha$ | yes | - | - |
| 8 | HDI | BADGE | 5u-Me-CO2 | LiCl | $\alpha$ | no | 5000 | 8.3 |
| 9 | HDI | BADGE | 5u-Me-CO2 | MgCl2 | $\alpha$ | no | 9000 | 4.8 |
| 10 (comp.) | HDI | BADGE | 5u-Me-CO2 | - | $\alpha$ | yes | | |
| 11 (comp.) | HDI | BADGE | 5u4,5-Cl-Me-I | - | $\beta$ | no | no reaction | |
| 12 (comp.) | HDI | BADGE | 5u-Mes-Cl | - | $\beta$ | yes | - | - |
| 13 (comp.) | HDI | BADGE | Me-Imi | - | $\beta$ | no | no reaction | - |
| 14 (comp.) | HDI | BADGE | Ph3MePBr | - | $\beta$ | no | no reaction | - |

*Procedure γ) for examples 15 to 22:*

The reactions, shown in Table 2, were executed as follows: Inside an MBraun glove box 1 equivalent of the carbene carboxylate (0.0008 g, 0.006 mmol) and 2 equivalents Lewis acid were dissolved in sulfolane (0.5 g) (or 1,3-dimethylimidazolidin-2-one (0.5 g)) (solution 1). 100 equivalents of the bisepoxide and 100 equivalents of the diisocyanate were dissolved in sulfolane (or 1,3-dimethylimidazolidin-2-one) (solution 2). Solution 1 was sealed with a septum. Solution 2 was filled in a syringe with a cannula. Both solutions were brought outside the glove box. Solution 1 was heated to 200°C before solution 2 was added. The times in which solution 2 was added differed depending on the monomers and are given below in detail for each example. The combined solutions were stirred an additional hour at 200°C. The reaction solution was added to propan-2-ol. The precipitate was centrifuged, the supernatant solution was decanted off and the remaining solid was dried under reduced pressure.
The products were subsequently analyzed by GPC and IR.

*Example 15: Synthesis of polyoxazolidinone based on bisphenol A diglycidyl ether as bisepoxide and 1,6-diisocyanatohexane as diisocyanate, 1,3-dimethylimidazolium-2-carboxylate (5u-Me-CO2) as carbene carboxylate and lithium chloride as Lewis acid, following procedure γ*

Inside an MBraun glove box the following solutions were prepared: 0.0008 g 1,3-dimethylimidazolium-2-carboxylate (1 equivalent, 0.006 mmol) and 0.0005 g lithium chloride (2 equivalents, 0.012 mmol) were dissolved in 0.5 g sulfolane (solution 1). 0.2000 g bisphenol A diglycidyl ether (100 equivalents, 0.588 mmol) and 0.0988 g 1,6-diisocyanatohexane (100 eqiuvalents, 0.588 mmol) were dissolved in 1.75 g sulfolane (solution 2). Solution 1, in a 4 ml-screw top jar, was sealed with a septum. Solution 2 was filled in a 3 ml-syringe with a cannula. Both solutions were brought outside the box. Solution 1 was heated to 200°C before solution 2 was added during 2 h (0.1 ml/7 min). Subsequently, the combined solutions were stirred 1 h at 200°C. The reaction solution was poured into 35 ml propan-2-ol and a colorless solid precipitated, the mixture was centrifuged (4000 rpm, 99 min), the supernatant solution was discarded and the remaining solid was dried under reduced pressure. In case further purification was necessary the solid was dissolved in 4-10 ml dichloromethane and precipitated from 35 ml propan-2-ol, centrifuged, the supernatant solution was discarded and the remaining solid was dried under reduced pressure. Yield: 72%. IR [$cm^{-1}$]: 2966, 2930, 2866, 1735, 1607, 1582, 1508, 1491, 1450, 1361, 1243, 1182, 1055, 1037, 951, 828, 759, 733, 567. $\overline{M}_n$=32000 g/mol. PDI=2.7.

*Example 16: Synthesis of polyoxazolidinone based on bisphenol A diglycidyl ether as bisepoxide and 4,4-methylene diphenyl diisocyanate as diisocyanate, 1,3-dimethylimidazolium-2-carboxylate (5u-Me-CO2) as carbene carboxylate and lithium chloride as Lewis acid, following procedure γ)*

Inside an MBraun glove box the following solutions/suspensions were prepared: 0.0008 g 1,3-dimethylimidazolium-2-carboxylate (1 equivalent, 0.006 mmol) and 0.0005 g lithium chloride (2 equivalents, 0.012 mmol) were dissolved in 0.5 g sulfolane (solution 1). 0.2000 g bisphenol A diglycidyl ether (100 equivalents, 0.588 mmol) and 0.1470 g diphenyl methane-4,4'-diisocyanate (MDI) (100 eqiuvalents, 0.588 mmol) were homogeneously suspended in 1.75 g sulfolane (solution 2). Solution 1, in a 4 ml-screw top jar, was sealed with a septum. Solution 2 was filled in a 3 ml-syringe with a cannula. Both solutions were brought outside the box. Solution 1 was heated to 200°C before solution 2 was added during 4 h (0.1 ml/14 min). Subsequently, the combined solutions were stirred 1 h at 200°C. The reaction solution was poured into 35 ml propan-2-ol and a colorless solid precipitated, the mixture was centrifuged (4000 rpm, 99 min), the supernatant solution was discarded and the remaining solid was dried under reduced pressure. In case further purification was necessary the solid was dissolved in 5-10 ml dimethylformamide or dimethyl sulfoxide and precipitated from 35 ml propan-2-ol, centrifuged, the supernatant solution was discarded and the remaining solid was dried under reduced pressure. Yield: 71%. IR [$cm^{-1}$]: 2964, 1741, 1697, 1509, 1430, 1406, 1309, 1220, 1183, 1133, 1030, 983, 950, 828, 751, 571, 511. $\overline{M}_n$=14000 g/mol. PDI=2.7.

*Example 17: Synthesis of polyoxazolidinone based on bisphenol A diglycidyl ether as bisepoxide and isophorone diisocyanate as diisocyanate, 1,3-dimethylimidazolium-2-carboxylate (5u-Me-CO2) as carbene carboxylate and lithium chloride as Lewis acid, following procedure γ)*

Inside an MBraun glove box the following solutions were prepared: 0.0008 g 1,3-dimethylimidazolium-2-carboxylate (1 equivalent, 0.006 mmol) and 0.0005 g lithium chloride (2 equivalents, 0.012 mmol) were dissolved in 0.5 g sulfolane (solution 1). 0.2000 g bisphenol A diglycidyl ether (100 equivalents, 0.588 mmol) and 0.1306 g isophorone diisocyanate (100 eqiuvalents, 0.588 mmol) were dissolved in 1.75 g sulfolane (solution 2). Solution 1, in a 4 ml-screw top jar, was sealed with a septum. Solution 2 was filled in a 3 ml-syringe with a cannula. Both solutions were brought

outside the box. Solution 1 was heated to 200°C before solution 2 was added during 2 h (0.1 ml/7 min). Subsequently, the combined solutions were stirred 1 h at 200°C. The reaction solution was added to 35 ml propan-2-ol and a colorless solid precipitated, the mixture was centrifuged (4000 rpm, 99 min), the supernatant solution was discarded and the remaining solid was dried under reduced pressure. In case further purification was necessary the solid was dissolved in 4-10 ml dichloromethane and precipitated from 35 ml propan-2-ol, centrifuged, the supernatant solution was discarded and the remaining solid was dried under reduced pressure. Yield: 69%. IR [$cm^{-1}$]: 2960, 1737, 1607, 1508, 1431, 1234, 1182, 1058, 1031, 951, 829, 761, 736, 694, 565. $\overline{M}_n$=31000 g/mol. PDI=1.9.

*Example 18: Synthesis of polyoxazolidinone based on bisphenol A diglycidyl ether as bisepoxide and dicyclohexyl methane-4,4-diisocyanate as diisocyanate, 1,3-dimethylimidazolium-2-carboxylate (5u-Me-CO2) as carbene carboxylate and lithium chloride as Lewis acid, following procedure $\gamma$)*

Inside an MBraun glove box the following solutions were prepared: 0.0008 g 1,3-dimethylimidazolium-2-carboxylate (1 equivalent, 0.006 mmol) and 0.0005 g lithium chloride (2 equivalents, 0.012 mmol) were dissolved in 0.5 g sulfolane (solution 1). 0.2000 g bisphenol A diglycidyl ether (100 equivalents, 0.588 mmol) and 0.1541 g dicyclohexyl methane-4,4'-diisocyanate (100 eqiuvalents, 0.588 mmol) were dissolved in 1.75 g sulfolane (solution 2). Solution 1, in a 4 ml-screw top jar, was sealed with a septum. Solution 2 was filled in a 3 ml-syringe with a cannula. Both solutions were brought outside the box. Solution 1 was heated to 200°C before solution 2 was added during 2 h (0.1 ml/7 min). Subsequently, the combined solutions were stirred 1 h at 200°C. The reaction solution was poured into 35 ml propan-2-ol and a colorless solid precipitated, the mixture was centrifuged (4000 rpm, 99 min), the supernatant solution was discarded and the remaining solid was dried under reduced pressure. In case further purification was necessary the solid was dissolved in 4-10 ml dichloromethane and precipitated from 35 ml propan-2-ol, centrifuged, the supernatant solution was discarded and the remaining solid was dried under reduced pressure. Yield: 73%. IR [$cm^{-1}$]: 2924, 2854, 1734, 1607, 1508, 1430, 1377, 1299, 1233, 1182, 1106, 1057, 951, 902, 828, 761, 734, 700, 567. $\overline{M}_n$=32000 g/mol. PDI=2.5.

*Example 19: Synthesis of polyoxazolidinone based on bisphenol A diglycidyl ether as bisepoxide and toluene-2,4-diisocyanate as diisocyanate, 1,3-dimethylimidazolium-2-carboxylate (5u-Me-CO2) as carbene carboxylate and lithium chloride as Lewis acid, following procedure $\gamma$)*

Inside an MBraun glove box the following solutions were prepared: 0.0008 g 1,3-dimethylimidazolium-2-carboxylate (1 equivalent, 0.006 mmol) and 0.0005 g lithium chloride (2 equivalents, 0.012 mmol) were dissolved in 0.5 g 1,3-dimethylimidazolidin-2-one (solution 1). 0.2000 g bisphenol A diglycidyl ether (100 equivalents, 0.588 mmol) and 0.1023 g toluene-2,4-diisocyanate (tdi) (100 eqiuvalents, 0.588 mmol) were dissolved in 1.75 g 1,3-dimethylimidazolidin-2-one (solution 2). Solution 1, in a 4 ml-screw top jar, was sealed with a septum. Solution 2 was filled in a 3 ml-syringe with a cannula. Both solutions were brought outside the box. Solution 1 was heated to 200°C before solution 2 was added during 4 h (0.1 ml/14 min). Subsequently, the combined solutions were stirred for 1 h at 200°C. The reaction solution was poured into 35 ml propan-2-ol and a colorless solid precipitated, the mixture was centrifuged (4000 rpm, 99 min), the supernatant solution was discarded and the remaining solid was dried under reduced pressure. In case further purification was necessary the solid was dissolved in 5-10 ml dimethylformamide or dimethyl sulfoxide and precipitated from 35 ml propan-2-ol, centrifuged, the supernatant solution was discarded and the remaining solid was dried under reduced pressure. Yield: 89%. IR [$cm^{-1}$]: 2966, 1742, 1608, 1507, 1410, 1222, 1183, 1093, 1025, 950, 828, 754, 684, 555. $\overline{M}_n$=11000 g/mol. PDI=2.4.

*Example 20: Synthesis of polyoxazolidinone based on bisphenol A diglycidyl ether as bisepoxide and both, 1,6-diisocyanatohexane and 4,4-methylene diphenyl diisocyanate as diisocyanates, 1,3-dimethylimidazolium-2-carboxylate (5u-Me-CO2) as carbene carboxylate and lithium chloride as Lewis acid, following procedure $\gamma$*

Inside an MBraun glove box the following solutions/suspensions were prepared: 0.0008 g 1,3-dimethylimidazolium-2-carboxylate (1 equivalent, 0.006 mmol) and 0.0005 g lithium chloride (2 equivalents, 0.012 mmol) were dissolved in 0.5 g sulfolane (solution 1). 0.2000 g bisphenol A diglycidyl ether (100 equivalents, 0.588 mmol), 0.0494 g 1,6-diisocyanatohexane (50 eqiuvalents, 0.294 mmol) and 0.0735 g diphenyl-4,4'-diisocyanate (50 equivalents, 0.294 mmol) were dissolved/suspended in 1.75 g sulfolane (solution 2). Solution 1, in a 4 ml-screw top jar, was sealed with a septum. Solution 2 was filled in a 3 ml-syringe with a cannula. Both solutions were brought outside the box. Solution 1 was heated to 200°C before solution 2 was added during 4 h (0.1 ml/14 min). Subsequently, the combined solutions were stirred for 1 h at 200°C. The reaction solution was poured into 35 ml propan-2-ol and a colorless solid precipitated, the mixture was centrifuged (4000 rpm, 99 min), the supernatant solution was discarded and the remaining solid was dried under

reduced pressure. In case further purification was necessary the solid was dissolved in 4-10 ml dichloromethane and precipitated from 35 ml propan-2-ol, centrifuged, the supernatant solution was discarded and the remaining solid was dried under reduced pressure. Yield: 92%. IR [$cm^{-1}$]: 2966, 2928, 1740, 1607, 1508, 1453, 1430, 1407, 1299, 1222, 1182, 1130, 1106, 983, 950, 827, 753, 732, 557, 511. $\overline{M}_n$=31000 g/mol. PDI=2.5.

*Example 21: Synthesis of polyoxazolidinone based on 1,4-butanediol diglycidyl ether as bisepoxide and 1,6-diisocyanatohexane as diisocyanate, 1,3-dimethylimidazolium-2-carboxylate (5u-Me-CO2) as carbene carboxylate and lithium chloride as Lewis acid, following procedure $\gamma$*

Inside an MBraun glove box the following solutions were prepared: 0.0008 g 1,3-dimethylimidazolium-2-carboxylate (1 equivalent, 0.006 mmol) and 0.0005 g lithium chloride (2 equivalents, 0.012 mmol) were dissolved in 0.5 g sulfolane (solution 1). 0.1188 g 1,4-butanediol diglycidyl ether (100 equivalents, 0.588 mmol) and 0.0988 g 1,6-hexane diisocyanate (100 eqiuvalents, 0.588 mmol) were dissolved in 1.75 g sulfolane (solution 2). Solution 1, in a 4 ml-screw top jar, was sealed with a septum. Solution 2 was filled in a 3 ml-syringe with a cannula. Both solutions were brought outside the box. Solution 1 was heated to 200°C before solution 2 was added during 2 h (0.1 ml/7 min). Subsequently, the combined solutions were stirred 1 h at 200°C. The reaction solution was poured into 35 ml demineralized water and a colorless solid precipitated, the mixture was centrifuged (4000 rpm, 99 min), the supernatant solution was discarded and the remaining solid was dried under reduced pressure. In case further purification was necessary the solid was dissolved in 5-10 ml dimethylformamide or dimethyl sulfoxide and precipitated from 35 ml demineralized water, centrifuged, the supernatant solution was discarded and the remaining solid was dried under reduced pressure. Yield: 52%. IR [$cm^{-1}$]: 2928, 1731, 1490, 1444, 1358, 1254, 1121, 1057, 762, 682. $\overline{M}_n$=9000 g/mol. PDI=2.0.

*Example 22: Synthesis of polyoxazolidinone based on 1,4-butanediol diglycidyl ether as bisepoxide and 4,4-methylene diphenyl diisocyanate as diisocyanate, 1,3-dimethylimidazolium-2-carboxylate (5u-Me-CO2) as carbene carboxylate and lithium chloride as Lewis acid, following procedure $\gamma$*

Inside an MBraun glove box the following solutions were prepared: 0.0008 g 1,3-dimethylimidazolium-2-carboxylate (1 equivalent, 0.006 mmol) and 0.0005 g lithium chloride (2 equivalents, 0.012 mmol) were dissolved in 0.5 g sulfolane (solution 1). 0.1188 g 1,4-butanediol diglycidyl ether (100 equivalents, 0.588 mmol) and 0.1470 g diphenylmethane-4,4'-diisocyanate (100 eqiuvalents, 0.588 mmol) were dissolved in 1.75 g sulfolane (solution 2). Solution 1, in a 4 ml-screw top jar, was sealed with a septum. Solution 2 was filled in a 3 ml-syringe with a cannula. Both solutions were brought outside the box. Solution 1 was heated to 200°C before solution 2 was added during 4 h (0.1 ml/14 min). Subsequently, the combined solutions were stirred 1 h at 200°C. The reaction solution was poured into 35 ml demineralized water and a colorless solid precipitated, the mixture was centrifuged (4000 rpm, 99 min), the supernatant solution was discarded and the remaining solid was dried under reduced pressure. In case further purification was necessary the solid was dissolved in 5-10 ml dimethylformamide or dimethyl sulfoxide and precipitated from 35 ml demineralized water, centrifuged, the supernatant solution was discarded and the remaining solid was dried under reduced pressure. Yield: 76%. IR [$cm^{-1}$]: 2866, 1738, 1612, 1513, 1481, 1429, 1405, 1311, 1219, 1129, 983, 856, 813, 799, 752, 650, 594, 512. $\overline{M}_n$=9000 g/mol. PDI=3.0.

**Table 2:** Summary of experiments for the synthesis of polyoxazolidinone based on various diisocyanates and bisphenol A diglycidyl ether as bisepoxide, using 1,3-dimethylimidazolium-2-carboxylate (5u-Me-CO2) and lithium chloride as catalytic system, following the experimental procedure $\gamma$

| Example | Isocyanate | Epoxide | Carbene | Lewis acid | Iso-cyanurare Trimer | Mn [g/mol] | PDI |
|---|---|---|---|---|---|---|---|
| 15 | HDI | BADGE | 5u-Me-CO2 | LiCl | no | 32000 | 2,7 |
| 16 | MDI | BADGE | 5u-Me-CO2 | LiCl | no | 14000 | 2,7 |
| 17 | IPDI | BADGE | 5u-Me-CO2 | LiCl | no | 31000 | 1,9 |
| 18 | 12H-MDI | BADGE | 5u-Me-CO2 | LiCl | no | 32000 | 2,5 |
| 19 | TDI | BADGE | 5u-Me-CO2 | LiCl | no | 11000 | 2,4 |
| 20 | HDI/ MDI | BADGE | 5u-Me-CO2 | LiCl | no | 31000 | 2,5 |
| 21 | HDI | BDE | 5u-Me-CO2 | LiCl | no | 9000 | 2.0 |
| 22 | MDI | BDE | 5u-Me-CO2 | LiCl | no | 9000 | 3.0 |

*Procedure δ) for examples 23 to 25:*

*Example 23: Synthesis of polyoxazolidinone based on 4,4-methylene diisocyanate as diisocyanate and bisphenol A diglycidyl ether as bisepoxide, using 1,3-dimethylimidazolium-2-carboxylate (5u-Me-CO2) and lithium chloride in the molar ratio 1/2 as catalytic system, following the experimental procedure δ*

Under a continuous flow of nitrogen, a glass flask (500 mL) was charged with LiCl (0.0999 g), 1,3-dimethylimidazolium-2-carboxylate (5u-Me-CO2, 0,1653 g) and sulfolane (28 mL) and stirred at 175°C for 15 min. Subsequently, ortho-dichlorobenzene (95 mL) was added. A glass flask (200 mL) was charged with methylene diphenyl diisocyanate (29.4920 g), para-tert-butylphenyl glycidyl ether (1.9448 g), bisphenol A glycidyl ether (38.5126 g), and 85 mL ortho-dichlorobenzene. The monomer solution was added slowly to the catalyst solution within 90 min. After the addition was finished, the reaction was stirred at 175°C for another 30 min. After a total reaction time of 120 min, para-tert-butylphenyl glycidyl ether (4.8620 g), dissolved in ortho-dichlorobenzene (10 mL), was added to the reaction solution. After the addition, the reaction was stirred at 175°C for another 3 h. The completion of the reaction was confirmed by the absence of the isocyanate band (2260 $cm^{-1}$) in the IR spectrum of the reaction mixture. Subsequently, 112 mL of *N*-methyl pyrrolidone were added to the reaction solution and the mixture was cooled to ambient temperature. The precipitation of the polymer was performed in ethanol at ambient temperature: The solution (50 mL) was added slowly into 400 mL of ethanol and milled with an ultraturrax dispersing instrument. The product was washed with ethanol, filtered, and dried at ambient temperature overnight. Subsequently, the product was dried under vacuum at 200°C for 6 h.
In the solid state IR spectrum the characteristic signal for the oxazolidinone carbonyl group was observed at 1750 $cm^{-1}$. The final product was characterized by GPC.

*Example 24: Synthesis of polyoxazolidinone based on 4,4-methylene diisocyanate as diisocyanate and bisphenol A diglycidyl ether as bisepoxide, using 1,3-dimethylimidazolium-2-carboxylate (5u-Me-CO2) and lithium chloride in the molar ratio 1/1 as catalytic system, following the experimental procedure δ*

Under a continuous flow of nitrogen, a glass flask (500 mL) was charged with LiCl (0.0999 g), 1,3-dimethylimidazolium-2-carboxylate (5u-Me-CO2, 0,3304 g) and sulfolane (28 mL) and stirred at 175°C for 15 min. Subsequently, ortho-dichlorobenzene (95 mL) was added. A glass flask (200 mL) was charged with methylene diphenyl diisocyanate (29.4920 g), para-tert-butylphenyl glycidyl ether (1.9448 g), bisphenol A glycidyl ether (38.5126 g), and 85 mL ortho-dichlorobenzene. The monomer solution was added slowly to the catalyst solution within 90 min. After the addition was finished, the reaction was stirred at 175°C for another 30 min. After a total reaction time of 120 min, para-tert-butylphenyl glycidyl ether (4.8620 g), dissolved in ortho-dichlorobenzene (10 mL), was added to the reaction solution. After the addition, the reaction was stirred at 175°C for another 3 h. The completion of the reaction was confirmed by the absence of the isocyanate band (2260 $cm^{-1}$) in the IR spectrum of the reaction mixture. Subsequently, 112 mL of *N*-methyl pyrrolidone were added to the reaction solution and the mixture was cooled to ambient temperature. The precipitation of the polymer was performed in ethanol at ambient temperature: The solution (50 mL) was added slowly into 400 mL of ethanol and milled with an ultraturrax dispersing instrument.
The product was washed with ethanol, filtered, and dried at ambient temperature overnight. Subsequently, the product was dried under vacuum at 200°C for 6 h.
In the solid state IR spectrum the characteristic signal for the oxazolidinone carbonyl group was observed at 1750 $cm^{-1}$. The final product was characterized by GPC.

*Example 25: Synthesis of polyoxazolidinone based on 4,4-methylene diisocyanate as diisocyanate and bisphenol A diglycidyl ether as bisepoxide, using 1,3-dimethylimidazolium-2-carboxylate (5u-Me-CO2) and lithium chloride in the molar ratio 2/1 as catalytic system, following the experimental procedure δ*

Under a continuous flow of nitrogen, a glass flask (500 mL) was charged with LiCl (0.0999 g), 1,3-dimethylimidazolium-2-carboxylate (5u-Me-CO2, 0,6606 g) and sulfolane (28 mL) and stirred at 175°C for 15 min. Subsequently, ortho-dichlorobenzene (95 mL) was added. A glass flask (200 mL) was charged with methylene diphenyl diisocyanate (29.4920 g), para-tert-butylphenyl glycidyl ether (1.9448 g), bisphenol A glycidyl ether (38.5126 g), and 85 mL ortho-dichlorobenzene. The monomer solution was added slowly to the catalyst solution within 90 min. After the addition was finished, the reaction was stirred at 175°C for another 30 min. After a total reaction time of 120 min, para-tert-butylphenyl glycidyl ether (4.8620 g), dissolved in ortho-dichlorobenzene (10 mL), was added to the reaction solution. After the addition, the reaction was stirred at 175°C for another 3 h. The completion of the reaction was confirmed by the absence of the isocyanate band (2260 $cm^{-1}$) in the IR spectrum of the reaction mixture. Subsequently, 112 mL of *N*-methyl pyrrolidone were added to the reaction solution and the mixture was cooled to ambient temperature. The precipitation of the polymer was performed in ethanol at ambient temperature: The solution (50 mL) was added slowly into 400 mL

of ethanol and milled with an ultraturrax dispersing instrument. The product was washed with ethanol, filtered, and dried at ambient temperature overnight. Subsequently, the product was dried under vacuum at 200°C for 6 h.
In the solid state IR spectrum the characteristic signal for the oxazolidinone carbonyl group was observed at 1750 $cm^{-1}$. The final product was characterized by GPC.

**Table 3:** Summary of experiments for the synthesis of polyoxazolidinone based on 4,4-methylene diisocyanate as diisocyanate and bisphenol A diglycidyl ether as bisepoxide, using various ratios of 1,3-dimethylimidazolium-2-carboxylate (5u-Me-CO2) and lithium chloride as catalytic system, following the experimental procedure δ. For GPC measurement of examples 23-25, the GPC system B was employed.

| Example | Isocyanate | Epoxide | Carbene | Lewis acid | Ratio NHC/L [mol/mol] | Trimer | Mn [g/mol] | PDI |
|---|---|---|---|---|---|---|---|---|
| 23 | MDI | BADGE | 5u-Me-CO2 | LiCl | 1/2 | no | 6900 | 4,0 |
| 24 | MDI | BADGE | 5u-Me-CO2 | LiCl | 1/1 | no | 7800 | 3,6 |
| 25 | MDI | BADGE | 5u-Me-CO2 | LiCl | 2/1 | no | 1900 | 4,3 |

## Claims

1. Catalysts for the synthesis of oxazolidinones, preferable polyoxazolidinones, comprising an N-heterocyclic carbene and a Lewis acid (L).

2. Catalysts according to claim 1, wherein the catalyst comprises

    i) a mixture of the N-heterocyclic carbene having the general formula (I), (II), (III), (IV) and/or (V) and the Lewis acid (L), with

    i-1) formula (I)

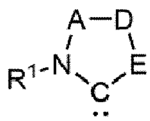

(I)

wherein $R^1$ represents $C_1$-$C_{10}$ alkyl, $C_2$-$C_{10}$ alkenyl, $C_3$-$C_{12}$ cycloalkyl, $C_6$-$C_{100}$ polyoxyalkylene, $C_5$-$C_{10}$ aryl or $C_5$-$C_{10}$ heteroaryl;
wherein A and D mutually independently represents methylene moiety, $CHR^2$, and $CR^2R^2$ or A and D together stand for a moiety from the series ethylene, propylene, butylene, 1,2-phenylene, $R^2$-C=N-, -N=N- or $C_1$-$C_{10}$ alkyl, $C_2$-$C_{10}$ alkenyl, $C_3$-$C_{12}$ cycloalkyl, $C_6$-$C_{100}$ polyoxyalkylene, $C_5$-$C_{10}$ aryl or $C_5$-$C_{10}$ hetaryl group-substituted 1,2-phenylene, -CH=N-, $-CH_2-NR^2-$, vinylene, $-CH_2=CHR^2-$,$-CHR^2=CH_2-$, $-CHR^2=CHR^2-$, the moiety $R^2$ mutually independently having the meaning given above for $R^1$;
and wherein E represents oxygen, sulfur, $-NR^{3'}-$ or $-PR^{3'}$, $R^{3'}$ having the meaning given above for $R^1$;

    i-2) formula (II)

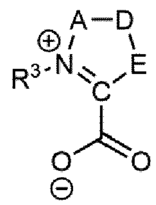

(II)

wherein $R^3$ has the meaning given above in formula (I) for $R^1$;
wherein A and D have the meaning given above in formula (I) for A and D;
wherein E has the meaning given above in formula (I) for E;
and wherein O stands mutually independently for oxygen, sulfur or N-$R^{10}$, wherein $R^{10}$ has the meaning given above in formula (I) for $R^1$;

i-3) formula (III)

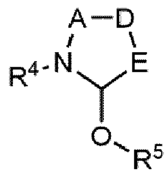

(III)

wherein $R^4$ has the meaning given above in formula (I) for $R^1$;
wherein A and D have the meaning given above in formula (I) for A and D;
wherein E has the meaning given above in formula (I) for E;
and wherein $R^5$ represents $C_1$-$C_{10}$ alkyl, $C_5$-$C_{12}$ cycloalkyl, $C_6$-$C_{100}$ polyoxyalkylene, $C_5$-$C_{10}$ aryl;

i-4) formula (IV)

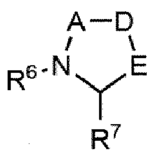

(IV)

wherein $R^6$ has the meaning given above in formula (I) for $R^1$; wherein A and D have the meaning given above in formula (I) for A and D;
wherein E has the meaning given above in formula (I) for E;
and wherein $R^7$ represents $C_1$-$C_{10}$ perfluoroalkyl, $C_1$-$C_{10}$ perchloroalkyl, partially fluorinated $C_1$-$C_{10}$ alkyl, partially chlorinated $C_1$-$C_{10}$ alkyl, perfluorinated $C_5$-$C_{10}$ aryl, partially fluorinated $C_5$-$C_{10}$ aryl, perchlorinated $C_5$-$C_{10}$ aryl, partially chlorinated $C_5$-$C_{10}$ aryl, preferably $CF_3$, $CCl_3$, pentafluorophenyl, tetrafluorophenyl moiety;

i-5) formula (V)

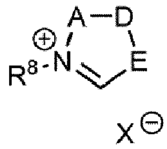

(V)

wherein $R^8$ has the meaning given above in formula (I) for $R^1$;
wherein A and D have the meaning given above in formula (I) for A and D;
wherein E has the meaning given above in formula (I) for E;
and wherein X represents $F^-$, $Cl^-$, $Br^-$, I, $BF_4^-$, $PF_6^-$, $SbF_6^-$, $HCO_3^-$;

and/or
ii) compounds having the formula (VI)

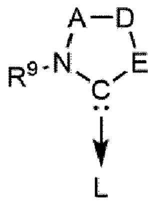

(VI)

wherein $R^9$ has the meaning given above in formula (I) for $R^1$;
wherein A and D have the meaning given above in formula (I) for A and D;
wherein E has the meaning given above in formula (I) for E;
and wherein L is the Lewis acid.

**3.** Catalysts according to claim 2, wherein in formulae (I), (II), (III), (IV), (V) and (VI) moieties $R^1$, $R^2$, $R^3$, $R^4$, $R^5$, $R^6$, $R^8$, $R^9$ and $R^{10}$ mutually independently and represents methyl, ethyl, n-propyl, isopropyl, tert-butyl, neopentyl, isoamyl, cyclohexyl, phenyl, 2,6-dimethylphenyl, 2,6-diisopropylphenyl or mesityl moiety;
wherein $R^7$ represents the CF3, CCl3, pentafluorophenyl, tetrafluorophenyl moiety;
and wherein moieties A and D represents mutually independently together stand for an ethylene, vinylene or propylene moiety.

**4.** Catalysts according to claim 2 or 3, $R^1$, $R^2$, $R^3$, $R^4$, $R^5$, $R^6$, $R^8$, $R^9$ and $R^{10}$ mutually independently and represents methyl, isopropyl, phenyl or mesityl moiety.

**5.** Catalysts according to one of claims 1 to 4, wherein the Lewis acid is one or more compound(s) and selected from the group consisting of LiCl, LiBr, LiI, $MgCl_2$, $MgBr_2$, $MgI_2$, $SmI_3$, preferred LiCl and LiBr, and most preferred LiCl.

**6.** Catalysts according to one of claims 1 to 5, wherein the N-heterocyclic carbene is one or more compounds having the formulae (II-1), (II-2), (II-3), (II-4), (II-5) and (II-6)

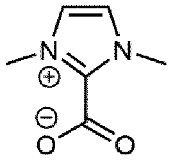
II-1

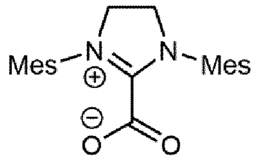
II-2

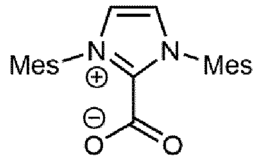
II-3

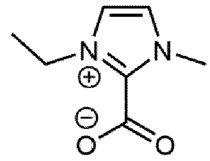
II-4

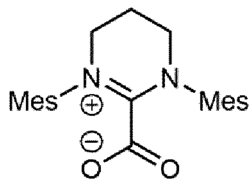
II-5

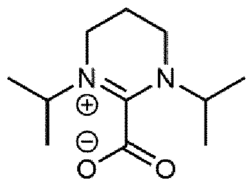
II-6

7. Catalysts according to one of claims 1 to 6, wherein the molar ratio of Lewis acid to the N-heterocyclic carbene is from 1 to 20 until 20 to 1, preferably from 1 to 5 until 5 to 1, more preferably from 1 to 2 or until 2 to 1.

8. Process for the production of an oxazolidinone compound, preferably a polyoxazolidinone compound, by reacting an isocyanate compound, preferably a polyisocyanate compound with an epoxide compound, preferably a polyepoxide compound, in the presence of the catalyst according to one of claims 1 to 7.

9. Process according to claim 8, wherein the reaction temperature is at least 80°C to 300°C, preferably in the range from 150°C to 250°C, more preferably in the range from 170°C to 220°C.

10. Process according to claim 8 or 9, wherein the isocyanate compound is a polyisocyanate compound and the polyisocyanate compound is one or more compounds and is selected from the group consisting of tetramethylene diisocyanate, 1,6-diisocyanatohexane (HDI), 2-methylpentamethylene diisocyanate, 2,2,4-trimethyl-hexamethylene diisocyanate (THDI), dodecanemethylene diisocyanate, 1,4-diisocyanatocyclohexane, 3-isocyanatomethyl-3,3,5-trimethylcyclohexyl isocyanate (isophorone diisocyanate, IPDI), diisocyanatodicyclohexylmethane (H12-MDI), diphenylmethane diisocyanate (MDI), 4,4'-diisocyanato-3,3'-dimethyldicyclohexylmethane, 4,4'-diisocyanato-2,2-dicyclohexyl propane, poly(hexamethylene diisocyanate), octamethylene diisocyanate, tolylene-$\alpha$,4-diisocyanate, poly(propylene glycol) tolylene-2,4-diisocyanate terminated, poly(ethylene adipate) tolylene-2,4-diisocyanate terminated, 2,4,6-trimethyl-1,3-phenylene diisocyanate, 4-chloro-6-methyl-1,3-phenylene diisocyanate, poly[1,4-phenylene diisocyanate-co-poly(1,4-butanediol)] diisocyanate, poly(tetrafluoroethylene oxide-co-difluoromethylene oxide) $\alpha,\omega$-diisocyanate, 1,4-diisocyanatobutane, 1,8-diisocyanatooctane, 1,3-bis(1-isocyanato-1 -methylethyl)benzene, 3,3' -dimethyl-4,4' -biphenylene diisocyanate, naphthalene-1,5-diisocyanate, 1,3-phenylene diisocyanate, 1,4-diisocyanatobenzene, 2,4- or 2,5- and 2,6-diisocyanatotoluene (TDI) or mixtures of these isomers, 4,4'-, 2,4'- or 2,2'-diisocyanatodiphenylmethane or mixtures of these isomers, 4,4'-, 2,4'- or 2,2'-diisocyanato-2,2-diphenylpropane-p-xylene diisocyanate and $\alpha,\alpha,\alpha',\alpha'$-tetramethyl- m- or -p-xylene diisocyanate (TMXDI) or biurets, isocyanurates or uretdiones of the aforementioned isocyanates.

11. Process according to one of claims 8 to 10, wherein the epoxide compound is a polyepoxide compound and the polyepoxide compound is one or more compounds and is selected from the group consisting of resorcinol diglycidyl ether, neopentyl glycol diglycidyl ether, 1,6-hexanediol diglycidyl ether, 1,4-butandiol diglycidyl ether, hydrogenated bisphenol A diglycidyl ether, bisphenol A diglycidyl ether, bisphenol-F diglycidyl ether, bisphenol-S diglycidyl ether, 9,9-bis(4-glycidyloxy phenyl)fluorine, tetrabromo bisphenol A diglycidyl ether, tetrachloro bisphenol A diglycidyl ether, tetramethyl bisphenol A diglycidyl ether, tetramethyl bisphenol F diglycidyl ether, tetramethyl bisphenol-S diglycidyl ether, diglycidyl terephthalate, diglycidyl o-phthalate, 1,4-cyclohexane dicarboxylic acid diglycidyl ester, ethylene glycol diglycidyl ether, polyethylene glycol diglycidyl ether, diethylene glycol diglycidyl ether, propylene glycol diglycidyl ether, dipropylene glycol diglycidyl ether, polypropylene glycol diglycidyl ether, polybutadiene diglycidyl ether, butadiene diepoxide, vinylcyclohexene diepoxide, limonene diepoxide, the diepoxides of double unsaturated fatty acid C1 - C18 alkyl esters, 2-dihydroxybenzene diglycidyl ether, 1,4-dihydroxybenzene diglycidyl ether, 4,4'-(3,3,5-trimethylcyclohexyliden)bisphenyl diglycidyl ether and diglycidyl isophthalate.

**12.** Polyoxazolidinone compound (A), obtainable by the reaction of an aliphatic polyisocyanate compound with the polyepoxide compound according to claim 11 in the presence of the catalyst according to one of claims 1 to 7, wherein the theoretical number average molecular weights $M_n$ of the polyoxazolidinon is preferentially ≥ 5000 to ≤ 500’000 g/mol, more preferred ≥ 5’000 to ≤ 100’000 g/mol and even more preferred ≥ 5’000 to ≤ 50’000 g/mol as determined with gel permeation chromatography (GPC).

**13.** Polyoxazolidinone compound (B), obtainable by the reaction of the polyisocyanate compound according to claim 10 with an aliphatic polyepoxide compound in the presence of the catalyst according to one of claims 1 to 7, wherein the theoretical number average molecular weights $M_n$ of the polyoxazolidinon is preferentially ≥ 5000 to ≤ 500’000 g/mol, more preferred ≥ 5’000 to ≤ 100’000 g/mol and even more preferred ≥ 5’000 to ≤ 50’000 g/mol as determined with gel permeation chromatography (GPC).

**14.** Polyoxazolidinone compound (C), obtainable by the reaction of an aliphatic polyisocyanate compound with an aliphatic polyepoxide compound in the presence of the catalyst according to one of claims 1 to 7, wherein the theoretical number average molecular weights $M_n$ of the polyoxazolidinon is preferentially ≥ 5000 to ≤ 500’000 g/mol, more preferred ≥ 5’000 to ≤ 100’000 g/mol and even more preferred ≥ 5’000 to ≤ 50’000 g/mol as determined with gel permeation chromatography (GPC).

**15.** Use of catalysts according to one of claims 1 to 7 for the production of oxazolidinone compounds, preferably polyoxazolidinone compounds.

Europäisches Patentamt
European Patent Office
Office européen des brevets

# EUROPEAN SEARCH REPORT

Application Number
EP 18 18 7254

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2014/076024 A1 (BAYER MATERIALSCIENCE AG [DE]) 22 May 2014 (2014-05-22)<br>* page 1, line 2 *<br>* page 2, line 17 - page 3, line 25 *<br>* page 12, lines 15-28 *<br>* example 11 *<br>----- | 12<br>1-11, 13-15 | INV.<br>C08G18/00<br>C08G18/73<br>C08G18/76<br>C08G18/75<br>C08G18/78<br>C08G18/10<br>C08G18/20<br>C08G18/22<br>B01J31/00<br>C08G59/40 |
| A | US 2017/088659 A1 (MÜLLER THOMAS ERNST [DE] ET AL) 30 March 2017 (2017-03-30)<br>* paragraphs [0002], [0010] - [0032], [0072], [0107] - [0116] *<br>* examples 1,2,9 *<br>----- | 1-15 | |
| A | US 2016/303554 A1 (GYORVÁRINÉHORVÁTH HENRIETTA [HU] ET AL)<br>20 October 2016 (2016-10-20)<br>* paragraphs [0001], [0044], [0055]; examples 1-4 *<br>----- | 1-15 | |
| A | US 4 022 721 A (ASHIDA KANEYOSHI)<br>10 May 1977 (1977-05-10)<br>* column 1, line 6 - column 4, line 49 *<br>* examples 1-19 *<br>----- | 1-15 | TECHNICAL FIELDS SEARCHED (IPC)<br>C08G<br>B01J<br>C09J |

The present search report has been drawn up for all claims

1

| Place of search | Date of completion of the search | Examiner |
|---|---|---|
| Munich | 1 February 2019 | Neugebauer, Ute |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 18 18 7254

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2019

| Patent document cited in search report | Publication date | Patent family member(s) | Publication date |
|---|---|---|---|
| WO 2014076024 A1 | 22-05-2014 | CA 2891200 A1 | 22-05-2014 |
| | | CN 104797614 A | 22-07-2015 |
| | | EP 2920218 A1 | 23-09-2015 |
| | | KR 20150084957 A | 22-07-2015 |
| | | RU 2015122509 A | 10-01-2017 |
| | | SG 11201503362Q A | 28-05-2015 |
| | | US 2015291726 A1 | 15-10-2015 |
| | | WO 2014076024 A1 | 22-05-2014 |
| US 2017088659 A1 | 30-03-2017 | CN 106471032 A | 01-03-2017 |
| | | EP 3143059 A1 | 22-03-2017 |
| | | US 2017088659 A1 | 30-03-2017 |
| | | WO 2015173110 A1 | 19-11-2015 |
| US 2016303554 A1 | 20-10-2016 | EP 3046667 A2 | 27-07-2016 |
| | | US 2016303554 A1 | 20-10-2016 |
| | | WO 2015040440 A2 | 26-03-2015 |
| US 4022721 A | 10-05-1977 | DE 2542489 A1 | 15-04-1976 |
| | | GB 1522959 A | 31-08-1978 |
| | | US 4022721 A | 10-05-1977 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016128380 A1
- EP 17154416 A
- WO 2014076024 A1
- EP 17191374 A
- WO 9955772 A


### Non-patent literature cited in the description


- **M. E. DYEN ; D. SWERN.** *Chem. Rev.,* 1967, vol. 67, 197
- *J. Polym. Sci.,* 1970, vol. 8, 2759-2773
- *Angew. Chem. Int. Ed. Engl.,* 1997, vol. 36, 2162-2187
- *Chem. Rev.,* 2000, vol. 100, 39-91
- *Angew. Chem. Int. Ed.,* 2008, vol. 47, 3122-3172
- *Nature,* 2014, vol. 510, 485-496
- *Chem. Soc. Rev.,* 2013, vol. 42, 6723-6753
- *Polym Chem.,* 2013, vol. 4, 2731-2740
- *Catal. Sci. Technol.,* 2014, vol. 4, 2466-2479
- *Chem. Commun.,* 2003, 28-29
- *Chem. Eur. J.,* 2009, vol. 15, 3103-3109
- *Eur. J. Inorg. Chem.,* 2009, 1970-1976
- *J. Am. Chem. Soc.,* 2012, vol. 134, 6776-6784
- *J. Am. Chem. Soc.,* 2005, vol. 127 (25), 9079-9084
- *Angew. Chem. Int. Ed. Engl.,* 1995, vol. 34 (9), 1021-1023
- *Helvetica Chimica Acta,* 1999, vol. 82 (12), 2348-2364
- *Chem. Eur. J.,* 2004, vol. 10, 4073-4079
- *Polym. Chem.,* 2013, vol. 4, 4172-4181
- *J. Am. Chem. Soc.,* 1977, vol. 99 (24), 7968
- Plastics Additives Handbook. Hanser Publishers, 2000
- *Chem, Eur. J,* 2009, vol. 15, 3103-3109
- *Chem, Eur. J.,* 2009, vol. 15, 3103-3109
- *Organometallics,* 2007, vol. 26, 6042-6049
- **BEILSTEIN.** *J. Org. Chem.,* 2007, vol. 3, 22